(19) Europäisches Patentamt
European Patent Office
Office européen des brevets

(11) **EP 4 453 043 B1**

(12) **EUROPEAN PATENT SPECIFICATION**

(45) Date of publication and mention of the grant of the patent:
**15.10.2025 Bulletin 2025/42**

(21) Application number: **22843759.6**

(22) Date of filing: **22.12.2022**

(51) International Patent Classification (IPC):
***C08F 2/26*** *(2006.01)* ***C08F 220/14*** *(2006.01)*
***C08F 220/18*** *(2006.01)* ***C09D 133/08*** *(2006.01)*
***C09D 133/12*** *(2006.01)*

(52) Cooperative Patent Classification (CPC):
(C-Sets available)
**C08F 2/26; C08F 220/14; C08F 220/1804; C09D 133/08; C09D 133/12** (Cont.)

(86) International application number:
**PCT/EP2022/087487**

(87) International publication number:
**WO 2023/118439 (29.06.2023 Gazette 2023/26)**

# (54) USE OF POLYMER DISPERSIONS IN WATERBORNE COATING FORMULATIONS AND POLYMER DISPERSIONS THEREFOR

VERWENDUNG VON POLYMERDISPERSIONEN IN WÄSSRIGEN BESCHICHTUNGSFORMULIERUNGEN UND POLYMERDISPERSIONEN DAFÜR

UTILISATION DE DISPERSIONS DE POLYMÈRES DANS DES FORMULATIONS DE REVÊTEMENTS EN PHASE AQUEUSE ET DISPERSIONS DE POLYMÈRES À CET EFFET

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2021 EP 21217412**

(43) Date of publication of application:
**30.10.2024 Bulletin 2024/44**

(73) Proprietor: **BASF SE**
**67056 Ludwigshafen am Rhein (DE)**

(72) Inventors:
- **WILLERICH, Immanuel**
  **67056 Ludwigshafen (DE)**
- **WOLF, Thomas**
  **67056 Ludwigshafen (DE)**
- **CABRERA, Ivan**
  **67056 Ludwigshafen (DE)**
- **LANGHANKI, Jens Gerald**
  **67056 Ludwigshafen (DE)**
- **LEIDNER, Arnold**
  **67056 Ludwigshafen (DE)**
- **LAUTERBACH, Felix**
  **67056 Ludwigshafen (DE)**

(74) Representative: **BASF IP Association**
**BASF SE**
**Global Intellectual Property**
**GBI, Building Z078**
**Carl-Bosch-Strasse 38**
**67056 Ludwigshafen (DE)**

(56) References cited:
**WO-A1-2011/154920** **WO-A1-2013/174894**
**WO-A1-2016/146427** **WO-A1-2016/169819**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/14, C08F 220/1804, C08F 212/08, C08F 220/1808, C08F 220/06;**
**C08F 220/1804, C08F 220/14, C08F 220/06**

## Description

The present invention relates to the use of aqueous polymer dispersions of a polymer P obtainable by emulsion polymerization of ethylenically unsaturated monomers M in the presence of at least one anionic emulsifier as binders in a waterborne coating formulation having a pH of at least pH 10.

Aqueous polymer dispersions of polymerized ethylenically unsaturated monomers, also referred to as polymer latexes, are fluid systems comprising dispersed polymer particles of a chain growth addition polymer in an aqueous dispersing medium. Depending on the polymer architecture of the dispersed polymer particles, the polymer dispersions can be used across a plethora of technical applications. In particular, they can be used as binders in waterborne coating formulations.

Important requirements for such binders are that they provide high mechanical strength and hardness to the coating and, hence, provide good stability of the coatings against mechanical impact and good blocking resistance. At the same time, the coating must be elastic in order to compensate mechanical stress. For exterior coatings, such as architectural coatings, also termed masonry paints, a low water-uptake and a good soil resistance and a good resistance against lichen and moss growth are also desirable.

Due to their content of organic matter, current waterborne coating formulations based on aqueous polymer dispersions, such as waterborne latex paint formulations and waterborne plasters, are sensitive to microbial infestation such as fungi, yeast or bacteria. Therefore, they must be stabilized against microbial infestation with preservation agents, in particular organic biocides, such isothiazolinones, e. g. monocyclic isothiazolinones, such as methylisothiazolinone (MIT), chloromethylisothiazolinone (CIT or CMIT) and octylisothiazolinone (OIT), and benzisothiazolinone (BIT), and formaldehyde releasers, such as methylol urea, bronopol and pyrithiones, such as zinc pyrithione and sodium pyrithione.. These organic biocides may cause allergic skin reaction, and their allowed maximum concentrations have been significantly reduced in recent years, and reliable preservation is becoming increasingly difficult. In particular, monocyclic isothiazolinones are typically required to achieve efficient stabilization of the paint against infestation by fungi and bacteria. However, for regulatory reasons, it is desirable to reduce the total amount of monocyclic isothiazolinones, such as MIT, CIT and OIT to levels below 15 ppm, in particular to levels below 1.5 ppm. While the amount of MIT, CIT and OIT can be somewhat reduced by combining them with BIT, bronopol and/or formaldehyde releasers, it is desired to keep the total amount of biocides below 100 ppm, in particular below 50 ppm and in relation to the total amount of monocyclic isothiazolinones below 1.5 ppm, especially below 2 ppm including formaldehyde and in relation to MIT in amounts of less than 1.5 ppm and in relation CIT in amounts of less than 0.5 ppm according to the "Awarding criteria for environmental labels" for "Low-emission interior wall paints RAL-UZ 102" (RAL gGmbH, January 2015 edition).

It is known to stabilize waterborne coating formulations against microbial infestation by buffering them at high pH levels of e.g. at least pH 9.5, in particular at least pH 10 or higher, e.g. in the range of pH 10 to 12, see e.g. WO 2002/000798, DE 102014013455 and DE 102018004944. Suitable buffers suggested therein include alkalimetal silicates, alkalimetal siliconates and alkanol amines. The references do not give detailed information on the polymer.

DE 102004023374 describes alkaline silica paints which contain a polymer dispersion based on a vinylacetate-ethylene-vinylester terpolymer as a binder. The polymer dispersions are not particularly suitable for other applications.

WO 2020/002102 describes a waterborne paint having a pH of at least 10 and containing a copolymer of styrene, butyl acrylate and 2-ethylhexyl acrylate as a binder and an alkali metal salt of an alkyl siliconate as a buffer. The binder provides good storage stability in terms pH value, viscosity and agglomeration to the paint. The content of polymerized styrene is at least 40% by weight, based on the total weight of the monomers forming the copolymer.

So far, waterborne coating formulations having a pH of at least pH 10 require binder polymers, wherein the polymers contain a high amount of styrene or where the binder is a terpolymer of vinylacetate, ethylene and vinylester. The applicability for these binders is somewhat limited. In particular for exterior paints all acrylate polymer dispersions and polymer dispersions based on acrylate polymers having a low content of polymerized vinyl aromatic monomers are desirable.

Inventors' attempt to transfer the preservation principle known to alkaline paints containing polymer dispersions of acrylate binders having a low content of polymerized styrene was not successful. The polymer dispersions turned out to be instable at the high pH values necessary for achieving preservation without organic biocides when stored for prolonged time and/or subjected to elevated temperature. In particular, both the polymer dispersion and the paint formulations tend to show a significant increase in viscosity when stored for prolonged time, and the polymer dispersions tend to coagulate at high pH values.

It is, therefore, an object of the present invention to provide aqueous polymer dispersions which can be formulated in alkaline waterborne coating compositions, in particular in waterborne paint formulations and waterborne plaster formulations having a high pH value of at least pH 10. The aqueous polymer dispersions should provide good coating properties to the waterborne coating formulations and should be stable against an increase in viscosity and a decrease of the pH value.

In a first attempt, the inventors of the present invention tried to achieve this objective by modifying aqueous

polymer dispersions known to be suitable as binders. However, this attempt was not entirely satisfactory. The inventors now surprisingly found that the aqueous polymer dispersions which are mainly based on acrylate and/or methacrylate ester monomers M1 as defined herein and which do not comprise a considerably large amount of styrene monomers M will be stable if the emulsion polymerisation is carried out in the presence of a base in such an amount sufficient to neutralize more than 20 mol-%, in particular more than 25 mol-% and especially at least 30 mol-% of the carboxyl groups of all monomers M2 subjected to the polymerization reaction. It is believed that in conventionally produced aqueous polymer dispersions the anionic surfactant will desorb from the surface of the polymer particles of the polymer dispersion and thus destabilize the polymer dispersion when the polymer dispersion is incorporated into a strongly alkaline medium. The reason may be that the rapid neutralization of the carboxyl groups increases the electrostatic repulsion of the carboxylate groups and the anionic groups of the anionic emulsifier. In contrast thereto, carrying out the emulsion polymerization in the presence of a base, at least a part of the carboxyl groups provided by the monomers M2 will already be present in their neutralized form and the anionic emulsifier will distribute in a different manner on the surface of the polymer particles, thereby ameliorating the desorption/destabilization upon rapid neutralization.

While it is known to carry out emulsion polymerization in the presence of a base, namely from EP 671420, EP 1422276 and WO 2009/096925, these references do not relate to alkaline coating compositions and do not address the problem of formulation stability in strongly alkaline waterborne coating formulations.

Therefore, a first aspect of the present invention relates to the use of an aqueous polymer dispersion of a polymer P obtainable by emulsion polymerization of ethylenically unsaturated monomers M in the presence of at least one anionic emulsifier, where the monomers M comprise or consist of the following monomers M1, M2 and optionally M3 and/or M4

a) 90 to 99.9% by weight, based on the total weight of monomers M, of monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
b) 0.1 to 5% by weight, based on the total weight of monomers M, of monomers M2 selected from monoethylenically unsaturated monomers bearing at least one carboxyl group;
c) 0 to 2% by weight, based on the total weight of monomers M, of one or more monoethylenically unsaturated monomers M3 bearing at least one sulfate or sulfonate group; and
d) 0 to 5% by weight or less than 0.5 % by weight, based on the total weight of monomers M, of one or more ethylenically unsaturated non-ionic monomers M4 different from the monomers M1, M2 and M3;

whereby the emulsion polymerization is carried out in the presence of a base in such an amount sufficient to neutralize more than 20 mol-%, in particular at least or more than 25 mol-% and especially at least 30 mol-% of the carboxyl groups of all monomers M2;
as a binder in waterborne paint or plaster formulations having a pH of at least pH 10 and especially at least pH 10.5, e.g. to a pH value in the range of pH 10 to pH 13.0, in particular in the range of pH 10 to pH 12.5, as determined at 20°C and 1 bar.

Accordingly, a second aspect of the invention relates to a method for producing waterborne coating formulations, in particular paint or plaster formulations, which comprises the following steps (i) to (iii)

(i) providing an aqueous polymer dispersion of a polymer P by emulsion polymerization of ethylenically unsaturated monomers M in the presence of at least one anionic emulsifier, where the monomers M comprise or consist of

a) 90 to 99.9% by weight, based on the total weight of monomers M, of monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
b) 0.1 to 5% by weight, based on the total weight of monomers M, of monomers M2 selected from monoethylenically unsaturated monomers bearing at least one carboxyl group;
and optionally one or both of monomers M3 and M4
c) 0 to 2% by weight, based on the total weight of monomers M, of one or more monoethylenically unsaturated monomers M3 bearing at least one sulfate or sulfonate group; and
d) 0 to 5% by weight or less than 0.5 % by weight, based on the total weight of monomers M, of one or more ethylenically unsaturated non-ionic monomers M4 different from the monomers M1, M2 and M3;

whereby the emulsion polymerization is carried out in the presence of a base in such an amount sufficient to neutralize

more than 20 mol-%, in particular at least or more than 25 mol-% and especially at least 30 mol-% of the carboxyl groups of all monomers M2;

(ii) incorporating the aqueous polymer dispersion of a polymer P obtained in step (i) as a binder into the waterborne coating formulation and

(iii) adjusting the pH value of the waterborne coating formulation to a pH of at least pH 10 and especially at least pH 10.5, e.g. to a pH value in the range of pH 10 to pH 13.0, in particular in the range of pH 10 to pH 12.5, as determined at 20°C and 1 bar.

The aqueous polymer dispersions of the polymer P are novel as long as the monomers M essentially consist of monomers M1, M2 and optionally one or both of M3 and M4, provided that they do not comprise more than 0.4 % by weight of monomers M4 or even no monomers M4 and less than 0.1% by weight, based on the total weight of monomers M, of ethylenically unsaturated monomers bearing phosphate and/or phosphonate groups, and where the polymer dispersion contains no or not more than 0.2%, based on the polymerized monomers M of a protective colloid such as polyvinyl alcohol.
Therefore, a third aspect of the present invention relates to an aqueous polymer dispersion of a polymer P, which is obtainable by emulsion polymerization of ethylenically unsaturated monomers M in the presence of at least one anionic emulsifier, where the monomers M consist of the following monomers M1, M2 and optionally M3 and/or M4:

a) 95 to 99.9% by weight, based on the total weight of monomers M, of monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
b) 0.1 to 5% by weight, based on the total weight of monomers M, of one or more monomers M2 selected from monoethylenically unsaturated monomers bearing at least one carboxyl group;
c) 0 to 2% by weight, based on the total weight of monomers M, of one or more monoethylenically unsaturated monomers M3 bearing at least one sulfate or sulfonate group; and
d) 0 to 0.4% by weight, based on the total weight of monomers M, of one or more ethylenically unsaturated non-ionic monomers M4 different from the monomers M1, M2 and M3;

whereby the emulsion polymerization is carried out in the presence of a base in such an amount sufficient to neutralize more than 20 mol-%, in particular at least or more than 25 mol-% and especially at least 30 mol-% of the carboxyl groups of all monomers M2;
wherein the monomers M comprise less than 0.1% by weight, based on the total weight of monomers M, of ethylenically unsaturated monomers bearing one or more phosphate and/or phosphonate groups and where the polymer dispersion contains no or not more than 0.2%, based on the polymerized monomers M of a protective colloid such as polyvinyl alcohol.

A fourth aspect of the invention relates to a process for producing an aqueous polymer dispersion of a polymer P, comprising an emulsion polymerization of ethylenically unsaturated monomers M as defined for the third aspect of the present invention in the presence of at least one anionic emulsifier and in the absence or in the presence of not more than 0.2% of protective colloids, whereby the emulsion polymerization is carried out in the presence of a base in such an amount sufficient to neutralize more than 20 mol-%, in particular more than 25 mol-% and especially at least 30 mol-% of the carboxyl groups of all monomers M2.
The invention is associated with several benefits. The polymer dispersions of the invention can be incorporated into strongly alkaline waterborne coating compositions, in particular waterborne paints, primers or plasters, having an alkaline pH of at least pH 10 and especially at least pH 10.5, e.g. to a pH value in the range of pH 10 to pH 13.0, in particular in the range of pH 10 to pH 12.5, as determined at 20°C and 1 bar, without suffering from coagulation. Upon storage, the pH of the polymer dispersion will not decrease significantly, i.e. the decrease in pH will be less than 0.5 pH units after storage for four weeks at 50°C. Moreover, the viscosity of the polymer dispersion will not strongly increase upon storage when neutralized to alkaline pH. In particular the viscosity of a polymer dispersion freshly stabilized with water glass and optionally an alkalimetal hydroxide, such as potassium hydroxide, to a pH of about pH 11.0 to 11.5 will not increase by a factor of more than 15 in particular by a factor of more than 10 after storage for 4 weeks at 50°C. Therefore, it is possible to formulate the strongly alkaline waterborne coating formulations without or with reduced amounts of organic biocides as described above.
Viscosities of the polymer dispersion as referred to herein refer to the dynamic viscosities as determined with a rotational viscosimeter at 22°C and low shear rates (e.g. 1.2 $s^{-1}$) with cone plate geometry.
These properties result in good formulation stability when the polymer dispersions are used as binders in

formulations having a strong alkaline pH of at least pH 10, especially at least pH 10.5. Apart from that, the monomer composition of the polymer P provides good coating properties similar to those known for all acrylic based polymer dispersions, including good mechanical stability, durability under weathering and low tackiness. These properties render the aqueous polymer dispersions of the polymer P particularly suitable for use in waterborne coating formulations having a pH of at least pH 10 and especially at least pH 10.5, e.g. to a pH value in the range of pH 10 to pH 13.0, in particular in the range of pH 10 to pH 12.5, and especially in the range of pH 10.5 to pH 12, as determined at 20°C and 1 bar. Due to their strong alkalinity the coating compositions can be formulated without or with reduced amounts of organic biocides as described above.

Here and throughout the specification, the term "waterborne coating compositions" means a liquid aqueous coating composition which, besides polymer binders, optionally pigment and fillers, and further conventional formulation ingredients, contains water as the continuous phase in an amount sufficient to achieve flowability of the composition. The terms "waterborne coating compositions" and "waterborne coating formulations" are used synonymously.

Here and throughout the specification, the terms "wt.-%" and "% by weight" are used synonymously.

Here and throughout the specification, the indefinite article "a" comprises the singular but also the plural, i.e. an indefinite article in respect to a component of a composition means that the component is a single compound or a plurality of compounds. If not stated otherwise, the indefinite article "a" and the expression "at least one" are used synonymously.

Here and throughout the specification, the term "pphm" means parts by weight per 100 parts of monomers M and corresponds to the relative amount in % by weight of a certain monomer based on the total amount of monomers M.

Here and throughout the specification, the terms "ethoxylated" and "polyethoxylated" are used synonymously and refer to compounds having an oligo- or polyoxyethylene group, which is formed by repeating units $O\text{-}CH_2CH_2$. In this context, the term "degree of ethoxylation" relates to the number average of repeating units $O\text{-}CH_2CH_2$ in these compounds.

Here and throughout the specification, the term "non-ionic" in the context of compounds, especially monomers, means that the respective compound does not bear any ionic functional group or any functional group, which can be converted by protonation or deprotonation into a ionic group.

Here and throughout the specification, the prefixes $C_n$-$C_m$ used in connection with compounds or molecular moieties each indicate a range for the number of possible carbon atoms that a molecular moiety or a compound can have. The term "$C_1$-$C_n$ alkyl" denominates a group of linear or branched saturated hydrocarbon radicals having from 1 to n carbon atoms. The term "$C_n$/$C_m$ alkyl" denominates a mixture of two alkyl groups, one having n carbon atoms, while the other having m carbon atoms.

Here and throughout the specification, the term "ethylenically unsaturated monomer" is understood that the monomer has at least one C=C double bond, e.g. 1, 2, 3 or 4 C=C double bonds, which are radically polymerizable, i.e. which under the conditions of an aqueous radical emulsion are polymerized to obtain a polymer having a backbone of carbon atoms. Here and throughout the specification, the term "monoethylenically unsaturated" is understood that the monomer has a single C=C double bond, which is susceptible to radical polymerization under conditions of an aqueous radical emulsion polymerization.

For example, the term $C_1$-$C_{20}$ alkyl denominates a group of linear or branched saturated hydrocarbon radicals having from 1 to 20 carbon atoms, while the term $C_1$-$C_4$ alkyl denominates a group of linear or branched saturated hydrocarbon radicals having from 1 to 4 carbon atoms. Examples of alkyl include, but are not limited to methyl, ethyl, n-propyl, isopropyl, n-butyl, sec-butyl, isobutyl, tert-butyl, 2-methylpropyl (isopropyl), 1,1-dimethylethyl (tert-butyl), pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl, isononyl, decyl, undecyl, dodecyl, tridecyl, isotridecyl, tetradecyl, pentadecyl, hexadecyl, heptadecyl, octadecyl, nonadecyl, eicosyl, heneicosyl docosyl and in case of nonyl, isononyl, decyl, undecyl, dodecyl, tridecyl, isotridecyl, tetradecyl, pentadecyl, hexadecyl, heptadecyl, octadecyl, nonadecyl, eicosyl, heneicosyl docosyl their isomers, in particular mixtures of isomers, such as "isononyl", "isodecyl". Examples of $C_1$-$C_4$-alkyl are for example methyl, ethyl, propyl, 1-methylethyl, butyl, 1-methylpropyl, 2-methylpropyl or 1,1-dimethylethyl.

The term "$C_5$-$C_{20}$-cycloalky"" as used herein refers to a mono- or bicyclic cycloalkyl radical, which is unsubstituted or substituted by 1, 2, 3 or 4 $C_1$-$C_4$-alkyl radicals, e.g. methyl groups, where the total number of carbon atoms of $C_5$-$C_{20}$-cycloalkyl from 5 to 20. Examples of $C_5$-$C_{20}$-alkyl include, but are not limited to cyclopentyl, cyclohexyl, methylcyclohexyl, dimethylcyclohexyl, cycloheptyl, cyclooctyl, cyclododecyl, cyclohexadecyl, norbornyl (= bicyclo [2.2.1]heptyl) and isobornyl (= 1,7,7-trimethylbicyclo[2.2.1]heptyl).

The term $C_2$-$C_{10}$-alkylene denominates a bivalent linear or branched saturated hydrocarbon radical having from 2 to 10 carbon atoms, in particular 2 to 6 or 2 to 4 carbon atoms ($C_2$-$C_6$-alkylene and $C_2$-$C_4$-alkylene, respectively) such as ethanediyl, propanediyl and butanediyl, where the radicals, which are bound to $C_2$-$C_4$-alkylene, are preferably bound not to the same carbon atoms of $C_2$-$C_{10}$-alkylene, such as in 1,2-ethanediyl, 1,2-propanediyl, 1,2-butanediyl, 2,3-butanediyl,

2-methyl-1,2-propanediyl, 1,3-propanediyl, 1,4-butanediyl, 1,3-butandiyl, 2-methyl-1,3-propandiyl, 1,5-pentandiyl, 1,5-hexandiyl etc..

The term "phenylene" as used herein refers to a bivalent phenyl radical, such as 1,2-phenylene and 1,4-phenylene. $C_1$-$C_4$-Alkylphenylene denominates phenylene, where the phenyl ring is substituted by an alkyl group.

The term "phenyl-$C_2$-$C_4$-alkylene" as used herein refers to a $C_2$-$C_4$-alkylene as defined herein, where 1 hydrogen atom has been replaced by a phenyl group.

According to the invention, the monomers M comprise or essentially consist of a combination of at least one monomer M1 and at least one monomer M2 and optionally one more of the monomers M3 and/or M4 as defined herein. Essentially consists is understood to mean that the monomers M do not comprise more than 0.1 pphm of monomers other than monomers M1, M2, M3 and M4.

Suitable monomers M1 are $C_1$-$C_{20}$-alkyl esters of acrylic acid, $C_5$-$C_{20}$-cycloalkyl esters of acrylic acid, $C_1$-$C_{20}$-alkyl esters of methacrylic acid, $C_5$-$C_{20}$-cycloalkyl esters of methacrylic acid and mixtures thereof.

Suitable $C_1$-$C_{20}$-alkyl esters of acrylic acid include, but are not limited to methyl acrylate, ethyl acrylate, n-propyl acrylate, isopropyl acrylate, n-butyl acrylate, sec-butyl acrylate, isobutyl acrylate, tert.-butyl acrylate n-pentyl acrylate, 2-pentyl acrylate, isopentyl acrylate, n-hexyl acrylate, n-octyl acrylate, 2-ethylhexyl acrylate, n-decyl acrylate, isodecyl acrylate, 2-propylheptyl acrylate, lauryl acrylate, $C_{12}$/$C_{14}$-alkyl acrylate, $C_{12}$-$C_{15}$-alkyl acrylate, isotridecyl acrylate, $C_{16}$/$C_{18}$-alkyl acrylate and stearyl acrylate.

Suitable $C_1$-$C_{20}$-alkyl esters of methacrylic acid include, but are not limited to methyl methacrylate, ethyl methacrylate, n-propyl methacrylate, isopropyl methacrylate, n-butyl methacrylate, sec-butyl methacrylate, isobutyl methacrylate, tert-butyl methacrylate, n-pentyl methacrylate, 2-pentyl methacrylate, isopentyl methacrylate, n-hexyl methacrylate, n-octyl methacrylate, 2-ethylhexyl methacrylate, n-decyl methacrylate, isodecyl methacrylate, 2-propylheptyl methacrylate, lauryl methacrylate, $C_{12}$/$C_{14}$-alkyl methacrylate, $C_{12}$-$C_{15}$-alkyl methacrylate, isotridecyl methacrylate, $C_{16}$/$C_{18}$alkyl methacrylate and stearyl methacrylate.

Suitable $C_5$-$C_{20}$-cycloalkyl esters of acrylic acid include, but are not limited to cyclohexyl acrylate, norbornyl acrylate and isobornyl acrylate.

Suitable $C_5$-$C_{20}$-cycloalkyl esters of methacrylic acid include, but are not limited to cyclohexyl methacrylate, norbornyl methacrylate and isobornyl methacrylate.

The monomers M1 may also comprise small amounts of monovinyl aromatic monomers, such as styrene, $C_1$-$C_2$-alkyl esters of methacrylic acid, such as methyl methacrylate and ethyl methacrylate, tert.-butyl methacrylate, tert.-butyl acrylate and mixtures thereof. According to the invention, the amount of monovinyl aromatic monomers does not exceed 15 pphm and may also be 0 pphm or less than 2 pphm. In a preferred group of embodiments, the monomers M contain a small amount of monovinyl aromatic monomers, which are in particular styrene, in an amount of 2 to 15 pphm, in particular in an amount of 5 to 15 pphm. Such a small amount will increase the stability of the aqueous polymer dispersion under strong alkaline conditions.

Preferably, the monomers M1 comprise at least one monomer M1a whose homopolymer has a glass transition temperature of more than 50°C, e.g. in the range of >50 to 200°C and at least one monomer M1b whose homopolymer has a glass transition temperature of not more than 50°C, e.g. in the range of -100 to +50°C. The glass transition temperatures Tg of the homopolymers of monomers M1 are well known and listed, for example, in Ullmann's Encyclopädie der technischen Chemie [Ullmann's Encyclopedia of Industrial Chemistry], 5th ed., vol. A21, p. 169, Verlag Chemie, Weinheim, 1992, J. Brandrup, E. H. Immergut, Polymer Handbook, 1st Ed., J. Wiley, New York 1966, 2nd Ed. J. Wiley, New York 1975, 3rd Ed. J. Wiley, New York 1989 and 4th Ed. J. Wiley, New York 2004 and in publicly available database, e.g. from "Polymer Properties Database", Crow® 2015-2021, "https://polymerdatabase.com/polymer%20physics/Polymer%20Tg%20C.html".

Apart from that the glass transition temperature Tg of the homopolymers of the monomers M1 as referred to herein can be determined experimentally by the differential scanning calorimetry (DSC) method according to ISO 11357-2:2013, preferably with sample preparation according to ISO 16805:2003.

Suitable monomers M1a are in particular

- monovinylaromatic monomers, such as styrene,
- $C_1$-$C_4$-alkyl esters of methacrylic acid, such as methyl methacrylate, ethyl methacrylate, n-propyl methacrylate, isopropyl methacrylate, n-butyl methacrylate, sec-butyl methacrylate, isobutyl methacrylate, tert-butyl methacrylate,
- $C_5$-$C_{10}$ cycloalkyl esters of methacrylic acid, such as cyclohexyl methacrylate, norbornyl methacrylate and isobornyl methacrylate,

and combinations thereof.

In particular, the monomers M1a comprises methyl methacrylate, optionally in combination with one further monomer M1a, which is preferably selected from $C_2$-$C_4$alkyl esters of methacrylic acid and styrene, and in particular in combination with 2 to 15 pphm styrene. Methyl methacrylate may of course also be the sole monomer M1a.

More preference is given to monomers M1, which consist of methyl methacrylate or a combination of methyl methacrylate with 2 to 15 pphm styrene.

Suitable monomers M1b are in particular $C_2$-$C_{12}$-alkyl ester of acrylic acid, such as ethyl acrylate, n-propyl acrylate, isopropyl acrylate, n-butyl acrylate, sec-butyl acrylate, isobutyl acrylate, n-pentyl acrylate, 2-pentyl acrylate, isopentyl acrylate, n-hexyl acrylate, n-octyl acrylate, 2-ethylhexyl acrylate, n-decyl acrylate, isodecyl acrylate, 2-propylheptyl acrylate and lauryl acrylate and combinations thereof. Particular preference is given to monomers M1b, which are selected from the group consisting of n-butyl acrylate, isobutyl acrylate and 2-ethylhexylacrylate and combinations thereof.

In particular, the monomers M1 comprise at least 90% by weight, based on the total weight of monomers M, of a combination of at least one monomer M1a and at least one monomer M1b, more particularly a combination of

- at least one monomer M1a, which is selected from methyl methacrylate and combinations thereof with one further monomer selected from $C_2$-$C_4$-alkyl esters of methacrylic acid and styrene, and especially from methyl methacrylate and combinations of methyl methacrylate with 2 to 15 pphm styrene,
- and at least one monomer M1b which is selected from $C_2$-$C_{12}$-alkyl esters of acrylic acid, in particular from the group consisting of n-butyl acrylate, isobutyl acrylate and 2-ethylhexylacrylate and combinations thereof.

If the monomers M1 comprise a combination of at least one monomer M1a and at least one monomer M1b, the weight ratio of monomers M1a to M1b is typically in the range of 3:7 to 7:3, in particular in the range of 4:6 to 6:4.

The monomers M2 are preferably selected from the group consisting of

- monoethylenically unsaturated monocarboxylic acids having 3 to 6 carbon atoms, such as acrylic acid, methacrylic acid, crotonic acid, 2-ethylpropenoic acid, 2-propylpropenoic acid, 2-acryloxyacetic acid and 2-methacryloxyacetic acid and
- monoethylenically unsaturated dicarboxylic acids having 4 to 6 carbon atoms, such as itaconic acid, mesaconic acid, citraconic acid and fumaric acid,

and combinations thereof. Particular preference is given to monomers M2 which are selected from the group consisting of acrylic acid, methacrylic acid and itaconic acid and combinations thereof. Especially, the monomers M2 are selected from acrylic acid, methacrylic acid and combinations of acrylic acid and methacrylic acid.

In a particular group of embodiments, the monomers M2 comprise acrylic acid. Preferably, the amount of acrylic acid is at least 50% by weight, in particular at least 70% by weight, based on the total amount of monomers M2. In this particular group of embodiments, the monomers M2 are especially selected from the group consisting of acrylic acid and combinations thereof with methacrylic acid, where the amount of acrylic acid in said combinations is preferably at least 50% by weight, in particular at least 70% by weight, based on the total amount of monomers M2.

The total amount of monomers M2 is preferably in the range of 0.2 to 3.0% by weight, (0.2 to 3.0 pphm), in particular in the range of 0.3 to 2.5% by weight (0.3 to 2.5 pphm), especially in the range of 0.4 to 2.0% by weight (0.4 to 2.0 pphm), based on the total amount of monomers M. Preferably, the amount of monomers M2 in the monomers M is such that the total amount of carboxyl groups in the polymer is in the range of 0.05 to 0.5 mol/kg of the polymer P.

The monomers M which form the polymer P of the aqueous polymer dispersion may comprise up to 2% by weight of one or more monoethylenically unsaturated monomers M3 bearing at least one sulfate or sulfonate group, in particular a sulfonate group. The monomers M3 may be used in their acid form or preferably as their salts, in particular their ammonium salts, alkalimetal salts or earthalkali metal salts.

In particular, the monomers M3 are selected from the group consisting of monoethylenically unsaturated sulfonic acids having 2 to 10 carbon atoms, in particular 2 to 8 carbon atoms such as vinylsulfonic acid, allylsulfonic acid, styrene sulfonic acid and monomers of the general formula (I)

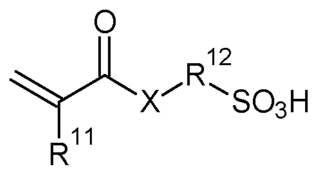

(I)

where

X is NH or O,

$R^{11}$ is hydrogen or methyl,

$R^{12}$ is selected from the group consisting of $C_2$-$C_6$-alkylene, phenylene, phenyl-$C_1$-$C_2$alkylene and $C_1$-$C_2$-alkylphenylene and where $R^{12}$ is in particular selected from the group consisting of $C_2$-$C_6$-alkylene,

and the salts thereof, preferably the ammonium, sodium, potassium, magnesium and/or calcium salt thereof, especially the sodium or potassium salts thereof. In formula (I), X is preferably NH. In formula (I), $R^{12}$ is preferably $C_2$-$C_6$-alkylene, such as 1,2-ethylene, 1,3-propylene, 1,2-propylene, 1-methyl-1,2-propylene, 1,4-butylene, 1,3-butylene etc..

In particular, the monomers M3 are selected from monomers of the formula (I) and the salts thereof, preferably the ammonium, sodium, potassium, magnesium and/or calcium salt thereof, especially the sodium or potassium salts thereof. Examples of monomers of the formula (I) include 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, 2-methacrylamidobutanesulfonic acid, 3-methacrylamido-3-methylbutanesulfonic acid, 2-methacrylamido-2,4,4-trimethylpentanesulfonic acid, 2-sulfoethylacrylate, 3-sulfopropylacrylate, 2-sulfoethylmethacrylate, 3-sulfopropylmethacrylate and the salts thereof, in particular the ammonium, sodium, potassium, magnesium and/or calcium salt thereof, especially the sodium salt or potassium salt thereof.

Especially, the monomer M3 is 2-acrylamido-2-propanesulfonic acid (AMPS) and/or a salt thereof, in particular 2-acrylamido-2-propanesulfonic acid sodium salt (AMPS-Na) or a mixture consisting of at least 50% by weight, in particular at least 70% by weight of AMPS and/or at least one salt thereof, based on the total amount of monomers M3 and at least one further monomer M3 as defined herein.

If present, the total amount of monomers M3, calculated as the sulfonic acid form, is preferably in the range of 0.1 to 2.0 pphm, in particular in the range of 0.2 to 1.5 pphm, especially in the range of 0.3 to 1.0 pphm. I the monomer M3 is present, the total amount of the of monomers M2 and M3 will generally not exceed 6 pphm, in particular pphm and especially 4 pphm and is in particular is in the range of 0.3 to 5.0 pphm, more particular in the range of 0.4 to 4.0 pphm and especially in the range of 0.5 to 3.0 pphm.

The monomers M may comprise up to 5% by weight of ethylenically unsaturated nonionic monomers M4 which are different from the monomers M1, M2 and M3.

Such monomers M4 are in particular selected from the group of non-ionic monomers having a water-solubility of at least 50 g/L, in particular at least 80 g/L or at least 100 g/L at 20°C and 1 bar in deionized water.

Examples of such monomers M4 include, but are not limited to

i) monomers M4a, which are selected from monoethylenically unsaturated non-ionic monomers having a solubility in deionized water at 20°C and 1 bar of at least 60 g/L in particular at least 80 g/L or at least 100 g/L at 20°C and 1 bar;
ii) monomers M4b, which are selected from monoethylenically unsaturated nonionic monomers having a silane functional group
iii) monomers M4c, which are selected from monoethylenically unsaturated nonionic monomers having an epoxy group;
iv) monomers M4d, which are selected from multiethylenically unsaturated monomers, i.e. monomers having at least two non-conjugated ethylenically unsaturated double bounds;
v) monomers M4e, which are selected from monoethylenically unsaturated copolymerizable UV-initiators.
vi) Monomers M4f, which are selected from monoesters of a polyethyleneoxide or $C_1$-$C_6$-alkylpolyethyleneoxides with a monoethylenically unsaturated $C_3$-$C_6$ monocarboxylic acid, such as acrylic acid or methacrylic acid, and monoethers of a polyethyleneoxide or $C_1$-$C_6$-alkylpolyethyleneoxides with a monoethylenically unsaturated $C_3$-$C_6$ alkenol, such as vinyl alcohol, allyl alcohol, 3-buten-1-ol or 2-methylprop-2-en-1-ol.

Suitable nonionic monoethylenically unsaturated monomer M4a are e.g. those which have a functional group selected from hydroxyalkyl groups, in particular hydroxy-$C_2$-$C_4$alkyl group, a primary carboxamide group, urea groups and keto groups.

The total amount of monomers M4a will usually not exceed 4 pphm, in particular 3 pphm, based on the total amount of monomers M. In particular, the total amount of monomers M4a, if present, is generally from 0.05 to 4 pphm, in particular 0.1 to 3 pphm, based on the total weight of the monomers M. In particular, groups of embodiments the monomers M do not comprise more than 0.4 pphm or not more than 0.2 pphm of monomers M4a or even no monomers M4a.

Examples for monomers M4a having a carboxamide group include, but are not limited to primary amides of monoethylenically unsaturated monocarboxylic acids having 3 to 6 carbon atoms, such as acrylamide and methacrylamide, and $C_1$-$C_4$-alkylamides of monoethylenically unsaturated monocarboxylic acids having 3 to 6 carbon atoms, such as N-methyl acrylamide, N-ethyl acrylamide, N-propyl acrylamide, N-isopropyl acrylamide, N-butyl acrylamide, N-methyl methacrylamide, N-ethyl methacrylamide, N-propyl methacrylamide, N-isopropyl methacrylamide and N-butyl methacrylamide. Most preferably, monomer M4a is selected from acrylamide and methacrylamide.

Examples for monomers M4a having a urea group are the $C_1$-$C_4$-alkyl esters of acrylic acid or methacrylic acid and the N-$C_1$-$C_4$-alkyl amides of acrylic acid or methacrylic acid, where the $C_1$-$C_4$-alkyl group bears an urea group or a 2-oxoimidazolin group such as 2-(2-oxo-imidazolidin-1-yl)ethyl acrylate, 2-(2-oxo-imidazolidin-1-yl)ethyl methacrylate, which are also termed 2-ureido acrylate and 2-ureido methacrylate, respectively, N-(2-acryloxyethyl)urea, N-(2-methacryloxyethyl)urea, N-(2-(2-oxoimidazolidin-1-yl)ethyl) acrylamide, N-(2-(2-oxo-imidazolidin-1-yl)ethyl) methacrylamide, as well as allyl or vinyl substituted ureas and allyl or vinyl substituted 2-oxoimidazolin compounds such as 1-allyl-2-oxoimidazolin, N-allyl urea and N-vinylurea.

Examples for monomers M4a having a keto group are the

vii) $C_2$-$C_8$-oxoalkyl esters of acrylic acid or methacrylic acid and the N-$C_2$-$C_8$-oxoalkyl amides of acrylic acid or methacrylic acid, such as diacetoneacrylamide (DAAM), and diacetonemethacrylamide, and

viii) $C_1$-$C_4$-alkyl esters of acrylic acid or methacrylic acid and the N-$C_1$-$C_4$-alkyl amides of acrylic acid or methacrylic acid, where the $C_1$-$C_4$-alkyl group bears a 2-acetylacetoxy group of the formula O-C(=O)-$CH_2$-C(=O)-$CH_3$ (also termed acetoacetoxy group), such as acetoacetoxyethyl acrylate, acetoacetoxypropyl methacrylate, acetoacetoxybutyl methacrylate and 2-(acetoacetoxy)ethyl methacrylate.

Suitable monomers M4b include monoethylenically unsaturated silane functional monomers, e.g. monomers which in addition to an ethylenically unsaturated double bond bear at least one mono-, di- and/or tri-$C_1$-$C_4$-alkoxysilane group, such as vinyl trimethoxysilane, vinyl triethoxysilane, methacryloxyethyl trimethoxysilane, methacryloxyethyl triethoxysilane, and mixtures thereof. The amount of silan functional monomers M4b, if present, will usually not exceed 1 pphm, and frequently be in the range from 0.01 to 1 pphm.

Suitable monomers M4 also include monoethylenically unsaturated monomers bearing at least one epoxy group (monomers M4c), in particular a glycidyl group such as glycidyl acrylate, glycidyl methacrylate, 2-glycidyloxyethyl acrylate and 2-glycidyloxyethyl methacrylate. The amount of monomers M4c, if present will usually not exceed 2 pphm, and frequently be in the range from 0.01 to 2 pphm.

The monomers M4 may also include multiethylenically unsaturated monomers (monomers M4d), i.e. monomers having at least two non-conjugated ethylenically unsaturated double bounds. The amounts of said monomers M4d will generally not exceed 1 pphm.

Examples of multiethylenically unsaturated monomers M4d include:

- diesters of monoethylenically unsaturated $C_3$-$C_6$ monocarboxylic acids with saturated aliphatic or cycloaliphatic diols, in particular diesters of acrylic acid or methacrylic acid, such as the diacrylates and the dimethacrylates of ethylene glycol (1,2-ethanediol), propylene glycol (1,2-propanediol), 1,2-butanediol, 1,3-butanediol, 1,4-butanediol, neopentyl glycol (2,2-dimethyl-1,3-propanediol), 1,6-hexanediol and 1,2-cyclohexanediol;
- monoesters of monoethylenically unsaturated $C_3$-$C_6$ monocarboxylic acids with monoethylenically unsaturated aliphatic or cycloaliphatic monohydroxy compounds, such as the acrylates and the methacrylates of vinyl alcohol (ethenol), allyl alcohol (2-propen-1-ol), 2-cyclohexen-1-ol or norbornenol, such as allyl acrylate and allyl methacrylate; and
- divinyl aromatic compounds, such as 1,3-divinyl benzene, 1,4-divinyl benzene.

Polymerized monoethylenically unsaturated copolymerizable UV-initiators M4e result in a crosslinking of the polymer chain upon exposure to sunlight. Monomers M4e bear an ethylenically unsaturated double bond, in particular an acrylate or methacrylate group and a moiety that is decomposed by UV radiation whereby a radical is formed. Such groups are typically benzophenone groups, acetophenone groups, benzoin groups or carbonate groups attached to a phenyl ring. Such compounds are disclosed e.g. in EP 346734, EP 377199, DE 4037079, DE 3844444, EP 1213 and US2015/0152297. Examples include but are not limited to 4-acryloxybenzophenone (= 4-benzoylphenyl propenoate), 4-methacryloxybenzophenone (= 4-benzoylphenyl 2-methylpropenoate), 4-(2-acryloxyethoxy)benzophenone (= 2-(4-benzoylphenoxy)ethyl propenoate), 4-(2-methacryloxyethoxy)benzophenone (= 2-(4-benzoylphenoxy)ethyl 2-methylpropenoate), O-(2-(meth)acryloxyethyl)-O-(benzoylphenyl) carbonate and O-(2-(meth)acryloxyethyl)-O-(acetylphenyl) carbonate. The amounts of said monomers M4e, if present, will generally not exceed 1 pphm and, if present, are typically present in an amount of 0.01 to 1 pphm, especially in an amount of 0.02 to 0.5 pphm.

Examples of monomers M4f are in particular the monoacrylate esters and monomethacrylate esters of polyethyleneoxides, the monoacrylate esters and monomethacrylate esters of methylpolyethyleneoxides, the monoalllyl ethers and mono-but-3-enyl ethers of polyethyleneoxides and the monoalllyl ethers and mono-but-3-enyl ethers of methylpolyethyleneoxides, wherein the polyethyleneoxide and methylpolyethylene oxide radicals generally have on average 5 to 100, in particular 10 to 50 ethylenoxide repeating units. The amounts of said monomers M4f, if present, will generally not exceed 5 pphm and, if present, are typically present in an amount of 0.1 to 5 pphm, especially in an amount of 0.2 to 3 pphm.

Preferably, the monomers M comprise less than 5% by weight, in particular less than 4% by weight, based on the total weight of monomers M, of ethylenically unsaturated monomers bearing a nitrile group such as acrylonitrile or

methacrylonitrile.

Preferably, the monomers M comprise less than 0.1% by weight, based on the total weight of monomers M, of ethylenically unsaturated monomers bearing one or more phosphate and/or phosphonate groups.

Preferably, the monomers M consist to at last 99.5% by weight of monomers M1, monomers M2 and optionally monomers M3.

In particular, the monomers M comprise at least 99.5% by weight, in particular at least 99.8% by weight of

- 95.0 to 99.9 pphm, in particular 97.0 to 99.8 pphm, more particular 97.5 to 99.7 pphm or 98 to 99.6 pphm of monomers M1, which are in particular a combination of monomers M1a and M1b,
- 0.1 to 5 pphm, in particular 0.2 to 3 pphm, more particularly 0.3 to 2.5 pphm and especially 0.4 to 2 pphm of monomers M2, which are in particular selected from the group consisting of acrylic acid, methacrylic acid or itaconic acid; and

optionally

- 0.1 to 2.0 pphm, in particular 0.2 to 1.5 pphm, especially 0.3 to 1.0 pphm of one or more monomers M3, which are in particular a monomers of the formula (I) and which are especially 2-acrylamidomethylpropane sulfonic acid or a salt thereof.

More particularly, the monomers M comprise at least 99.5% by weight, in particular at least 99.8% by weight of

- 95.0 to 99.9 pphm, in particular 97.0 to 99.8 pphm, more particular 97.5 to 99.7 pphm or 98 to 99.6 pphm of monomers M1, which is a combination of methyl methacrylate and one or two monomers M1b, or which is a combination of methyl methacrylate, 2 to 15 pphm styrene and one or two monomers M1b,
- 0.1 to 5 pphm, in particular 0.2 to 3 pphm, more particularly 0.3 to 2.5 pphm and especially 0.4 to 2 pphm of monomers M2, which selected from the group consisting of acrylic acid, methacrylic acid and mixtures of acrylic acid with methacrylic acid; and

optionally

- 0.1 to 2.0 pphm, in particular 0.2 to 1.5 pphm, especially 0.3 to 1.0 pphm of one or more monomers M3, which are in particular a monomers of the formula (I) and which are especially 2-acrylamidomethylpropane sulfonic acid or a salt thereof.

Even more particularly, the monomers M comprise at least 99.5% by weight, in particular at least 99.8% by weight of

- 95.0 to 99.9 pphm, in particular 97.0 to 99.8 pphm, more particular 97.5 to 99.7 pphm or 98 to 99.6 pphm of monomers M1, which is a combination of methyl methacrylate and one or two monomers M1b, or which is a combination of methyl methacrylate, 2 to 15 pphm styrene and one or two monomers M1b, where the monomers M1b are selected from n-butyl acrylate, isobutyl acrylate and 2-ethylhexyl acrylate,
- 0.1 to 5 pphm, in particular 0.2 to 3 pphm, more particularly 0.3 to 2.5 pphm and especially 0.4 to 2 pphm of monomers M2, which selected from the group consisting of acrylic acid, methacrylic acid and mixtures of acrylic acid with methacrylic acid; and

optionally

- 0.1 to 2.0 pphm, in particular 0.2 to 1.5 pphm, especially 0.3 to 1.0 pphm of one or more monomers M3, which are in particular a monomers of the formula (I) and which are especially 2-acrylamidomethylpropane sulfonic acid or a salt thereof.

Especially, the monomers M comprise at least 99.5% by weight, in particular at least 99.8% by weight of

- 95.0 to 99.9 pphm, in particular 97.0 to 99.8 pphm, more particular 97.5 to 99.7 pphm or 98 to 99.6 pphm of monomers M1, which is a combination of methyl methacrylate, 2 to 15 pphm styrene and one or two monomers M1b, where the monomers M1b are selected from n-butyl acrylate, isobutyl acrylate and 2-ethylhexyl acrylate,
- 0.1 to 5 pphm, in particular 0.2 to 3 pphm, more particularly 0.3 to 2.5 pphm and especially 0.4 to 2 pphm of monomers M2, which selected from the group consisting of acrylic acid, methacrylic acid and mixtures of acrylic acid with methacrylic acid; and

optionally

- 0.1 to 2.0 pphm, in particular 0.2 to 1.5 pphm, especially 0.3 to 1.0 pphm of one or more monomers M3, which are in particular a monomers of the formula (I) and which are especially 2-acrylamidomethylpropane sulfonic acid or a salt thereof.

The aqueous polymer dispersion of a polymer P is prepared by emulsion polymerization of ethylenically unsaturated monomers M in the presence of at least one anionic emulsifier and in the presence of a base in such an amount sufficient to neutralize more than 20 mol-%, in particular at least or more than 25 mol-% and especially at least 30 mol-% of the carboxyl groups of all monomers M2.

It is important that the amount of base present in the emulsion polymerization is sufficient to achieve the above degree of neutralization during at least a period during the emulsion polymerization of the monomers M, i. e. before all the monomers M are polymerized. Higher amounts of base are not detrimental and the amount of base may be in excess of the amount required for achieving complete neutralization of all carboxyl groups of the monomers M2, i.e. the amount of base may be more than 100 mol-% based on the carboxyl groups present in the monomers M2. Thus, the amount of base may be in the range of >20 to 300 mol-%, in particular in the range of 25 to 250 mol-% and especially in the range of 30 to 220 mol-% with respect to the molar ratio of the base equivalents and the carboxyl groups present in the monomers M2 to be polymerized.

Suitable bases for effecting the neutralization of the carboxyl groups of the monomers M2 are those bases, whose protonated form has a $pK_S$ value which is at least 3 $pK_S$ units in particular at least 4 $pK_S$ units higher than the $pK_S$ value of the monomer M2 or, in case of monomers M2 bearing 2 or more carboxyl groups, at least 3 $pK_S$ units, in particular at least 4 $pK_S$ units higher than the highest $pK_S$ value of the monomer M2. Here, the $pK_S$ values of the acid and the base refer to the $pK_S$ values determined at 25°C and 1 bar in deionized water at concentrations of 0.001 to 0.1 mol/L.

Suitable bases are in particular ammonia, alkalimetal hydroxides such as sodium hydroxide and potassium hydroxide, and alkalimetal carbonates such as sodium carbonate and potassium carbonate, and calcium hydroxide.

Preferably, the major portion of the base required for the above neutralization is present in the emulsion polymerization when or better before 80 mol-% of the monomers M2 are polymerized. For this, a portion of the base may be charged to the reaction vessel wherein the emulsion polymerization is carried out, before the emulsion polymerization of the monomers M is started. Preferably, the portion of this base will not be more than 70 mol-% of the total amount of base present during the emulsion polymerization. In particular at least 30 mol-%, more particularly at least 50 mol-% of the amount of based required for achieving the above neutralization degrees is added to the emulsion polymerization during the polymerization reaction of the monomers M.

In particular at least 20 mol-%, more particularly at least 25 mol-% of the base required for achieving the neutralization of the carboxyl groups of all monomers M2 is present in the emulsion polymerization when or better before 80 mol-% of the monomers M2 are polymerized. Preferably, at least 15 mol-%, in particular at least 20 mol-% of the base required for achieving the neutralization of the carboxyl groups of all monomers M2 is present in the emulsion polymerization when or better before 60 mol-% of the monomers M2 are polymerized. Even more preferred the emulsion is carried out in a manner that at least 20 mol-%, more particularly at least 25 mol-% of the base required for achieving the neutralization of the carboxyl groups of all monomers M2 is present in the emulsion polymerization when or better before 80 mol-% of the monomers M2 are polymerized and at least 15 mol-%, in particular at least 20 mol-% of the base required for achieving the neutralization of the carboxyl groups of all monomers M2 is present in the emulsion polymerization when or better before 60 mol-% of the monomers M2 are polymerized.

Preferably, the monomers M2 are not polymerized before the remainder of the monomers M are polymerized. Rather the emulsion polymerization is preferably carried out in a manner that the majority of the monomers M2, in particular at least 80 % of the monomers M2 or all of the monomers M2 are polymerized as a mixture with the monomers M1.

Preferably, the emulsion polymerization is carried out by monomer feeding process, i. e. a process wherein at least 90% by weight of the monomers M are fed to the emulsion polymerization under polymerization conditions. In particular, the portion of monomers M which are fed to the emulsion polymerization under polymerization conditions comprise at least 80 %, more particularly at least 90% or at least 95% or all of the monomers M2 present in the monomers M.

In particular the monomer feed process is carried out in a manner that an amount of the base which is sufficient to neutralize more than 20 mol-%, in particular at least 25 mol-% of the carboxyl groups of all monomers M2 is present in the emulsion polymerization before 80 mol-% of all monomers M2 have been fed to emulsion polymerization. In particular the monomer feed process is carried out in a manner that an amount of the base which is sufficient to neutralize more than 15 mol-%, in particular at least 20 mol-% of the carboxyl groups of all monomers M2 is present in the emulsion polymerization before 60 mol-% of all monomers M2 have been fed to emulsion polymerization.

Especially, the monomer feed process is carried out in a manner that an amount of the base which is sufficient

a) to neutralize more than 20 mol-%, in particular at least 25 mol-% of the carboxyl groups of all monomers M2 is present in the emulsion polymerization before 80 mol-% of all monomers M2 have been fed to emulsion polymerization and

b) to neutralize more than 15 mol-%, in particular at least 20 mol-% of the carboxyl groups of all monomers M2 is present in the emulsion polymerization before 60 mol-% of all monomers M2 have been fed to emulsion polymerization.

More particularly, the monomer feed process is carried out in a manner that at least 90% by weight of the monomers M are fed to the emulsion polymerization as an aqueous emulsion containing the monomers M1 and M2, where during a period P the emulsion contains a base in an amount that the such that the degree of neutralization of the monomers M2 in the emulsion fed to the polymerization is at least 30%, in particular at least 40% during said period P. Preferably, the duration of this period is at least 30% of the total feeding time. Preferably, the period P does not start later than the point of time, where 20 % of the monomers have been fed to the emulsion polymerization.

Preferably, the emulsion polymerization of the monomers M is carried out in a manner that the pH value of the polymer dispersion at the end of the emulsion polymerisation is at least pH 5.5, e. g. in the range of pH 5.5 to pH 9.0, as determined at 20°C and 1 bar. The end of the emulsion polymerization of the monomers M is the point of time, when at least 97% by weight, in particular at least 98% of all monomers M are polymerized. Typically, this point of time is reached before a post polymerization or a chemical deodorization is started.

The aqueous polymer dispersions of the present invention are in particular prepared by a free radical aqueous emulsion polymerization of the monomers M. The term "free radical aqueous emulsion polymerization" means that the polymerization of the monomers M is initiated by radicals formed by the decay of a polymerization initiator, whereby free radicals are formed in the polymerization mixture. It is therefore also termed "radically initiated emulsion polymerization". The procedure for radically initiated emulsion polymerizations of monomers in an aqueous medium has been extensively described and is therefore sufficiently familiar to the skilled person [cf. in this regard Emulsion Polymerization in Encyclopedia of Polymer Science and Engineering, vol. 8, pages 659 ff. (1987); D.C. Blackley, in High Polymer Latices, vol. 1, pages 35 ff. (1966); H. Warson, The Applications of Synthetic Resin Emulsions, chapter 5, pages 246 ff. (1972); D. Diederich, Chemie in unserer Zeit 24, pages 135 to 142 (1990); Emulsion Polymerisation, Interscience Publishers, New York (1965); DE-A 40 03 422; and Dispersionen synthetischer Hochpolymerer, F. Hölscher, Springer-Verlag, Berlin (1969)]. Typical procedures for aqueous emulsion polymerization of ethylenically unsaturated monomers are also described in the patent literature discussed in the introductory part of this patent application.

The radically initiated aqueous emulsion polymerization is typically carried out by emulsifying the ethylenically unsaturated monomers in the aqueous medium which forms the aqueous phase, typically by use of surface active compounds, such as emulsifiers and/or protective colloids, and polymerizing this system using at least one initiator which decays by formation of radicals and thereby initiates the chain growth addition polymerization of the ethylenically unsaturated monomers M. The preparation of an aqueous polymer dispersion in accordance with the present invention may differ from this general procedure only in the specific use of the aforementioned monomers M1 to M4. It will be appreciated here that the process shall, for the purposes of the present specification, also encompass the seed, staged, one-shot, and gradient regimes which are familiar to the skilled person.

The anionic emulsifier present during the emulsion polymerization may principally be selected from any anionic emulsifier conventionally used in an emulsion polymerization of ethylenically unsaturated monomers M.

Preferred anionic emulsifiers are in particular those which bear at least one sulfate or sulfonate group. Likewise, anionic emulsifiers which bear at least one phosphate or phosphonate group may be used, either as sole anionic emulsifiers or in combination with one or more anionic emulsifiers which bear at least one sulfate or sulfonate group.

Examples of preferred anionic emulsifiers which bear at least one sulfate or sulfonate group, are, for example,

- the salts, especially the alkali metal and ammonium salts, of alkyl sulfates, especially of $C_8$-$C_{22}$-alkyl sulfates,
- the salts, especially the alkali metal and ammonium salts, of alkylethersulfates, i. e. of sulfuric monoesters of ethoxylated alkanols, especially of sulfuric monoesters of ethoxylated $C_8$-$C_{22}$-alkanols, preferably having an ethoxylation level (EO level) in the range from 2 to 40,
- the salts, especially the alkali metal and ammonium salts, of alkylsulfonic acids, especially of $C_8$-$C_{22}$-alkylsulfonic acids,
- the salts, especially the alkali metal and ammonium salts, of dialkyl esters, especially di-$C_4$-$C_{18}$-alkyl esters of sulfosuccinic acid,
- the salts, especially the alkali metal and ammonium salts, of alkylbenzenesulfonic acids, especially of $C_4$-$C_{22}$-alkylbenzenesulfonic acids, and
- the salts, especially the alkali metal and ammonium salts, of mono- or disulfonated, alkyl-substituted diphenyl ethers, for example of bis(phenylsulfonic acid) ethers bearing a $C_4$-$C_{24}$-alkyl group on one or both aromatic rings. The latter are common knowledge, for example from US-A-4,269,749, and are commercially available, for example as Dowfax®

2A1 (Dow Chemical Company),

- surfactants, which have a polymerizable ethylenically unsaturated double bond as described herein, e.g. the compounds of the formulae (I) - (IV), where X and Y, respectively, are $SO_3^-$ or O-$SO_3^-$.

Examples of anionic emulsifiers which bear a phosphate or phosphonate group, include, but are not limited to the following salts are selected from the following groups:

- the salts, especially the alkali metal and ammonium salts, of mono- and dialkyl phosphates, especially $C_8$-$C_{22}$-alkyl phosphates,
- the salts, especially the alkali metal and ammonium salts, of phosphoric monoesters of $C_2$-$C_3$-alkoxylated alkanols, preferably having an alkoxylation level in the range from 2 to 40, especially in the range from 3 to 30, for example phosphoric monoesters of ethoxylated $C_8$-$C_{22}$-alkanols, preferably having an ethoxylation level (EO level) in the range from 2 to 40, phosphoric monoesters of propoxylated $C_8$-$C_{22}$-alkanols, preferably having a propoxylation level (PO level) in the range from 2 to 40, and phosphoric monoesters of ethoxylated-co-propoxylated $C_8$-$C_{22}$-alkanols, preferably having an ethoxylation level (EO level) in the range from 1 to 20 and a propoxylation level of 1 to 20,
- the salts, especially the alkali metal and ammonium salts, of alkylphosphonic acids, especially $C_8$-$C_{22}$-alkylphosphonic acids and
- the salts, especially the alkali metal and ammonium salts, of alkylbenzenephosphonic acids, especially $C_4$-$C_{22}$-alkylbenzenephosphonic acids.
- surfactants, which have a polymerizable ethylenically unsaturated double bond as described herein, e.g. the compounds of the formulae (I) - (IV), where X and Y, respectively, are $HPO_3^-$, $PO_3^{2}$, O-$HPO_3^-$ or O-$PO_3^{2}$.

Anionic emulsifiers may also comprise emulsifiers, which have a polymerizable double bond, e.g. the emulsifiers of the formulae (I) to (IV) and the salts thereof, in particular the alkalimetal salts or ammonium salts thereof:

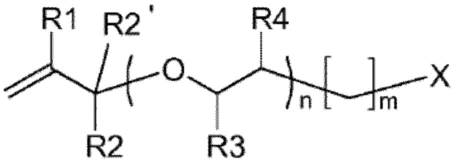

(I)

In formula (I), $R^1$ is H, $C_1$-$C_{20}$-alkyl, $C_5$-$C_{10}$-cycloalkyl, phenyl optionally substituted with $C_1$-$C_{20}$-alkyl, $R^2$ and $R^{2'}$ are both H or together are O, $R^3$ and $R^4$ are H or methyl, m is 0 or 1, n is an integer from 1 - 100 and X is $SO_3^-$, O-$SO_3^-$, O-$HPO_3^-$ or O-$PO_3^{2-}$.

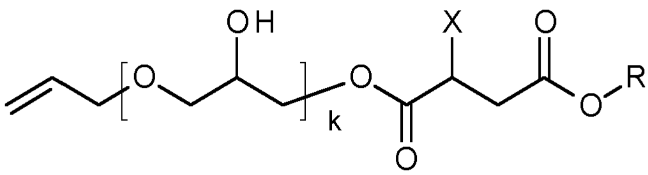

(II)

In formula (II), R is H, $C_1$-$C_{20}$-alkyl, $C_5$-$C_{10}$-cycloalkyl, phenyl optionally substituted with $C_1$-$C_{20}$-alkyl, k is 0 or 1 and X is $SO_3^-$, O-$SO_3^-$, O-$HPO_3^-$ or O-$PO_3^{2-}$.

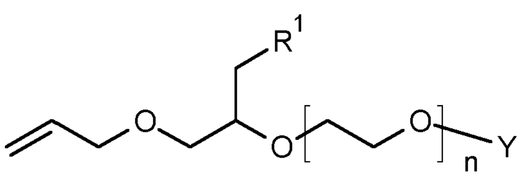

(III)

In formula (III), $R^1$ is H, $C_1$-$C_{20}$-alkyl, O-$C_1$-$C_{20}$-alkyl, $C_5$-$C_{10}$-cycloalkyl, O-$C_5$-$C_{10}$-cycloalkyl, O-phenyl optionally substituted with $C_1$-$C_{20}$-alkyl, n is an integer from 1 - 100 and Y is $SO_3^-$, $HPO_3^-$ or $PO_3^{2-}$.

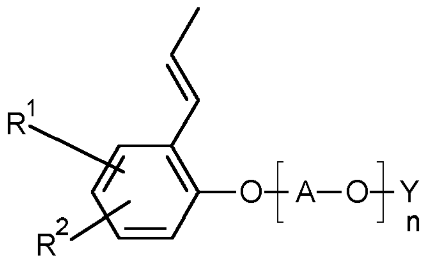

(IV)

In formula (IV), $R^1$ is H, $C_1$-$C_{20}$-alkyl or 1-phenylethyl, $R^2$ is H, $C_1$-$C_{20}$-alkyl or 1-phenylethyl, A is $C_2$-$C_4$-alkanediyl, such as 1,2-ethanediyl, 1,2-propanediyl, 1,2-butanediyl or 1,4-butanediyl, n is an integer from 1 - 100 and Y is $SO_3^-$, $HPO_3^-$ or $PO_3^{2.-}$

Particular embodiments of the copolymerizable emulsifiers of the formula (I) are referred to as sulfate esters or phosphate esters of polyethylene glycol monoacrylates.

Particular embodiments of the copolymerizable emulsifiers of the formula (I) may likewise also be referred to as phosphonate esters of polyethylene glycol monoacrylates, or allyl ether sulfates. Commercially available co-polymerizable emulsifiers of the formula (I) are Maxemul® emulsifiers, Sipomer® PAM emulsifiers, Latemul® PD, and ADEKA Reasoap® PP-70. Particular embodiments of the copolymerizable emulsifiers of the formula (II) are also referred to as alkyl allyl sulfosuccinates. Commercially available copolymerizable emulsifiers of the formula (II) is Trem® LF40. Particular embodiments of the copolymerizable emulsifiers of the formula (III) are also referred to as branched unsaturated. Commercially available copolymerizable emulsifiers of the formula (III) are Adeka® Reasoap emulsifiers and Hitenol® KH. Particular embodiments of the copolymerizable emulsifiers of the formula (IV) are also referred to as polyoxyethylene alkylphenyl ether sulfate and polyoxyethylene mono- or distyrylphenyl ether sulfate. Commercially available copolymerizable emulsifiers of the formula (IV) are Hitenol® BC and Hitenol® AR emulsifiers.

Further suitable anionic emulsifiers can be found in Houben-Weyl, Methoden der organischen Chemie [Methods of Organic Chemistry], volume XIV/1, Makromolekulare Stoffe [Macromolecular Substances], Georg-Thieme-Verlag, Stuttgart, 1961, p. 192-208.

Preferably, the surfactant comprises at least one anionic emulsifier which bears at least one sulfate or sulfonate group. The at least one anionic emulsifier which bears at least one sulfate or sulfonate group, may be the sole type of anionic emulsifiers. However, mixtures of at least one anionic emulsifier which bears at least one sulfate or sulfonate group and at least one anionic emulsifier which bears at least one phosphate or phosphonate group may also be used. In such mixtures, the amount of the at least one anionic emulsifier which bears at least one sulfate or sulfonate group is preferably at least 50% by weight, based on the total weight of anionic surfactants used in the process of the present invention. In particular, the amount of anionic emulsifiers which bear at least one phosphate or phosphonate group does not exceed 20% by weight, based on the total weight of anionic surfactants used in the process of the present invention.

Preferred anionic surfactants are anionic emulsifiers which are selected from the following groups, including mixtures thereof:

- the salts, especially the alkali metal and ammonium salts, of alkyl sulfates, especially of $C_8$-$C_{22}$-alkyl sulfates,
- the salts, especially the alkali metal salts, of alkylether sulfates, i. e. of sulfuric monoesters of ethoxylated alkanols, especially of sulfuric monoesters of ethoxylated $C_8$-$C_{22}$-alkanols, preferably having an ethoxylation level (EO level) in the range from 2 to 40,
- of alkylbenzenesulfonic acids, especially of $C_4$-$C_{22}$-alkylbenzenesulfonic acids, and
- of mono- or disulfonated, alkyl-substituted diphenyl ethers, for example of bis(phenylsulfonic acid) ethers bearing a $C_4$-$C_{24}$-alkyl group on one or both aromatic rings.
- polymerizable emulsifiers of the formula (III) and

combinations thereof.

Particular preference is given to anionic emulsifiers which are selected from the following groups including mixtures thereof:

- the salts, especially the alkali metal and ammonium salts, of alkyl sulfates, especially of $C_8$-$C_{22}$-alkyl sulfates,
- the salts, especially the alkali metal salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40.

and combinations thereof.

In addition to the aforementioned anionic emulsifiers, the surfactant used for the emulsion polymerization of the monomers M may also comprise one or more nonionic surface-active substances which are especially selected from nonionic emulsifiers. Suitable nonionic emulsifiers are e.g. araliphatic or aliphatic nonionic emulsifiers, for example ethoxylated mono-, di- and trialkylphenols (EO level: 3 to 50, alkyl radical: $C_4$-$C_{10}$), ethoxylates of long-chain alcohols (EO level: 3 to 100, alkyl radical: $C_8$-$C_{36}$), and polyethylene oxide/polypropylene oxide homo- and copolymers. These may comprise the alkylene oxide units copolymerized in random distribution or in the form of blocks. Very suitable examples are the EO/PO block copolymers. Preference is given to ethoxylates of long-chain alkanols, in particular to those, where the alkyl radical $C_8$-$C_{30}$ having a mean ethoxylation level of 5 to 100 and, among these, particular preference to those having a linear $C_{12}$-$C_{20}$ alkyl radical and a mean ethoxylation level of 10 to 50.

The surfactants used in the process of the present invention will usually comprise not more than 30% by weight, especially not more than 20% by weight, of nonionic surfactants based on the total amount of surfactants used in the process of the present invention and especially do not comprise any nonionic surfactant. Combinations of at least one anionic surfactant and at least non-ionic surfactant may also be used. In this case, the weight ratio of the total amount of anionic surfactant to the total amount of non-ionic surfactant is in the range of 99:1 to 50:50, in particular 98:2 to 60:40, especially in the range 95:5 to 70:30.

Preferably, the amount of emulsifier will be used in such an amount that the amount of anionic emulsifier is in the range from 0.2 to 5% by weight, especially in the range from 0.3 to 4.5% by weight, based on the monomers M to be polymerized. In a multistep emulsion step emulsion polymerization, the surfactant will be used in such an amount that the amount of surfactant is usually in the range from 0.2 to 5% by weight, especially in the range from 0.3 to 4.5% by weight, based on the total amount of monomers polymerized in the respective steps.

Preferably, the major portion, i.e. at least 80% of the emulsifiers used, is added to the emulsion polymerization in parallel to the addition of the monomers. In particular, the monomers M are fed as an aqueous emulsion to the polymerization reaction which contains at least 80% of the emulsifier used in the emulsion polymerization.

The free-radically initiated aqueous emulsion polymerization is triggered by means of a free-radical polymerization initiator (free-radical initiator). These may, in principle, be peroxides or azo compounds. Of course, redox initiator systems are also useful. Peroxides used may, in principle, be inorganic peroxides such as hydrogen peroxide or peroxodisulfates such as the mono- or di-alkali metal or ammonium salts of peroxodisulfuric acid, for example the mono- and disodium, -potassium or ammonium salts, or organic peroxides such as alkyl hydroperoxides, for example tert-butyl hydroperoxide, p-menthyl hydroperoxide or cumyl hydroperoxide and also dialkyl or diaryl peroxides such as di-tert-butyl or di-cumyl peroxide. Azo compounds used are essentially 2,2'-azobis(isobutyronitrile), 2,2'-azobis(2,4-dimethylvaleronitrile) and 2,2'-azobis(amidinopropyl) dihydrochloride (AIBA, corresponds to V-50 from Wako Chemicals). Suitable oxidizing agents for redox initiator systems are essentially the peroxides specified above. Corresponding reducing agents which may be used are sulfur compounds with a low oxidation state such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols such as dihydroxymaleic acid, benzoin and/or ascorbic acid, and reducing saccharides such as sorbose, glucose, fructose and/or dihydroxyacetone.

Preferred free-radical initiators are inorganic peroxides, especially peroxodisulfates.

In general, the amount of the free-radical initiator used, based on the total amount of monomers M, is 0.05 to 2 pphm, preferably 0.1 to 1 pphm, based on the total amount of monomers M.

The amount of free-radical initiator required for the emulsion polymerization of monomers M can be initially charged in the polymerization vessel completely. However, it is also possible to charge none of or merely a portion of the free-radical initiator, for example not more than 30% by weight, especially not more than 20% by weight, based on the total amount of the free-radical initiator and then to add any remaining amount of free-radical initiator to the free-radical polymerization reaction under polymerization conditions. Preferably, at least 70%, in particular at least 80%, especially at least 90% or the total amount of the polymerization initiator are fed to the free-radical polymerization reaction under polymerization conditions. Feeding of the monomers M may be done according to the consumption, batch-wise in one or more portions or continuously with constant or varying flow rates during the free-radical emulsion polymerization of the monomers M.

Generally, the term "polymerization conditions" is understood to mean those temperatures and pressures under which the free-radically initiated aqueous emulsion polymerization proceeds at sufficient polymerization rate. They depend particularly on the free-radical initiator used. Advantageously, the type and amount of the free-radical initiator, polymerization temperature and polymerization pressure are selected, such that a sufficient amount of initiating radicals is always present to initiate or to maintain the polymerization reaction.

It has been found advantageous to perform the free-radical emulsion polymerization of the monomers M in the presence of a seed latex. A seed latex is a polymer latex which is present in the aqueous polymerization medium before the

polymerization of monomers M is started. The seed latex may help to better adjust the particle size or the final polymer latex obtained in the free-radical emulsion polymerization of the invention.

Principally, every polymer latex may serve as a seed latex. For the purpose of the invention, preference is given to seed latices, where the particle size of the polymer particles is comparatively small. In particular, the Z average particle diameter of the polymer particles of the seed latex, as determined by dynamic light scattering (DLS) at 20°C (see below), is preferably in the range from 10 to 80 nm, in particular from 10 to 50 nm. Preferably, the polymer particles of the seed latex is made of ethylenically unsaturated monomers which comprise at least 95% by weight, based on the total weight of the monomers forming the seed latex, of one or more monomers selected from the group consisting of $C_2$-$C_{10}$-alkyl esters of acrylic acid, in particular ethyl acrylate, n-butyl acrylate, n-hexyl acrylate, n-octyl acrylate, 2-ethyl-hexylacrylate, $C_1$-$C_4$-alkyl methacrylates such as methyl methacrylate, monoethylenically unsaturated nitriles, such as acrylonitrile and vinylaromatic monomers as defined above such as styrene and mixtures thereof. In particular, the polymer particles of the seed latex are made of ethylenically unsaturated monomers which comprise at least 95% by weight, based on the total weight of the monomers forming the seed latex, of one or more monomers selected from the group consisting of $C_1$-$C_4$-alkyl methacrylates such as methyl methacrylate, monoethylenically unsaturated nitriles, such as acrylonitrile and vinylaromatic monomers as defined above such as styrene and mixtures thereof.

For this, the seed latex is usually charged into the polymerization vessel before the polymerization of the monomers M is started. In particular, the seed latex is charged into the polymerization vessel followed by establishing the polymerization conditions, e.g. by heating the mixture to polymerization temperature. It may be beneficial to charge at least a portion of the free-radical initiator into the polymerization vessel before the addition of the monomers M is started. However, it is also possible to add the monomers M and the free-radical polymerization initiator in parallel to the polymerization vessel.

The amount of seed latex, calculated as solids, may frequently be in the range of 0.01 to 10% by weight, preferably in the range of 0.05 to 5% by weight, in particular in the range of 0.05 to 3% by weight, based on the total weight of the monomers in the monomer composition M to be polymerized.

The free-radical aqueous emulsion polymerizations of the invention are usually carried out at temperatures in the range from 0 to 170°C. Temperatures employed are frequently in the range of 50 to 150°C and often 70 to 130°C. The aqueous emulsion polymerization of the invention can be conducted at a pressure of less than, equal to or greater than 1 atm (atmospheric pressure), and so the polymerization temperature may exceed 100°C and may be up to 170°C. Polymerization of the monomers is frequently carried out at ambient pressure, but it may also be carried out under elevated pressure. In this case, the pressure may assume values of 1.2, 1.5, 2, 5, 10, 15 bar (absolute) or even higher values. If emulsion polymerizations are conducted under reduced pressure, pressures of 950 mbar, frequently of 900 mbar and often 850 mbar (absolute) are established. Advantageously, the free-radical aqueous emulsion polymerization of the invention is conducted at ambient pressure (about 1 atm) with exclusion of oxygen, for example under an inert gas atmosphere, for example under nitrogen or argon.

The process for producing the polymer latex of the present invention may be a single stage polymerization or a multistage emulsion polymerization. In a single stage polymerization, the overall composition of the monomers M, which are fed to the polymerization reaction under polymerization conditions, remains the same or almost the same, while in a multistage emulsion polymerization the overall composition of the monomers M, which are fed to the polymerization reaction under polymerization conditions, is altered at least once, in particular such that the theoretical glass transition temperature of the resulting polymer formed in one stage differs from the theoretical glass transition temperature of the resulting polymer formed in another stage by at least 10°C, in particular by at least 20°C or at least 40°C.

The polymerization of the monomers M can optionally be conducted in the presence of chain transfer agents. Chain transfer agents are understood to mean compounds that transfer free radicals, and which reduce the molecular weight of the growing chain and/or which control chain growth in the polymerization. Examples of chain transfer agents are aliphatic and/or araliphatic halogen compounds, for example n-butyl chloride, n-butyl bromide, n-butyl iodide, methylene chloride, ethylene dichloride, chloroform, bromoform, bromotrichloromethane, dibromodichloromethane, carbon tetrachloride, carbon tetrabromide, benzyl chloride, benzyl bromide, organic thio compounds, such as primary, secondary or tertiary aliphatic thiols, for example ethanethiol, n-propanethiol, 2-propanethiol, n-butanethiol, 2-butanethiol, 2-methyl-2-propanethiol, n-pentanethiol, 2 pentanethiol, 3-pentanethiol, 2-methyl-2-butanethiol, 3-methyl-2-butanethiol, n hexanethiol, 2-hexanethiol, 3-hexanethiol, 2-methyl-2-pentanethiol, 3-methyl-2 pentanethiol, 4-methyl-2-pentanethiol, 2-methyl-3-pentanethiol, 3-methyl-3 pentanethiol, 2-ethylbutanethiol, 2-ethyl-2-butanethiol, n-heptanethiol and the isomeric compounds thereof, n-octanethiol and the isomeric compounds thereof, n nonanethiol and the isomeric compounds thereof, n-decanethiol and the isomeric compounds thereof, n-undecanethiol and the isomeric compounds thereof, n dodecanethiol and the isomeric compounds thereof, n-tridecanethiol and isomeric compounds thereof, substituted thiols, for example 2-hydroxyethanethiol, aromatic thiols such as benzenethiol, ortho-, meta- or para-methylbenzenethiol, alkyl esters of mercaptoacetic acid (thioglycolic acid), such as 2-ethylhexyl thioglycolate, alkyl esters of mercaptopropionic acid, such as octyl mercapto propionate, and also further sulfur compounds described in Polymer Handbook, 3rd edition, 1989, J. Brandrup and E.H. Immergut, John Wiley & Sons, section II, pages 133 to 141, but also aliphatic and/or aromatic

aldehydes, such as acetaldehyde, propionaldehyde and/or benzaldehyde, unsaturated fatty acids, such as oleic acid, dienes having nonconjugated double bonds, such as divinylmethane or vinylcyclohexane, or hydrocarbons having readily abstractable hydrogen atoms, for example toluene.

Alternatively, it is possible to use mixtures of the aforementioned chain transfer agents that do not disrupt one another. The total amount of chain transfer agents optionally used in the process of the invention, based on the total amount of monomers M, will generally not exceed 2% by weight, in particular 1% by weight. However, it is possible, that during a certain period of the polymerization reaction the amount of chain transfer agent added to the polymerization reaction may exceed the value of 2% by weight and may be as high as 8% by weight, in particular at most 4% by weight, based on the total amount of monomers M added to the polymerization reaction during said period.

It is frequently advantageous, when the aqueous polymer dispersion obtained on completion of polymerization of the monomers M is subjected to an after-treatment to reduce the residual monomer content. This after-treatment is effected either chemically, for example by completing the polymerization reaction using a more effective free-radical initiator system (known as postpolymerization), and/or physically, for example by stripping the aqueous polymer dispersion with steam or inert gas. Corresponding chemical and physical methods are familiar to those skilled in the art - see, for example, EP-A 771328, DE-A 19624299, DE-A 19621027, DE-A 19741184, DE-A 19741187, DE-A 19805122, DE-A 19828183, DE-A 19839199, DE-A 19840586 and DE-A 19847115. The combination of chemical and physical after-treatment has the advantage that it removes not only the unconverted ethylenically unsaturated monomers, but also other disruptive volatile organic constituents (VOCs) from the aqueous polymer dispersion.

Preferably, the particles of the polymer P contained in the polymer dispersion have a Z-average particle diameter, as determined by QELS, in the range of 50 to 500 nm, in particular in the range of 70 to 450 nm. Here and in the following, the particle size and particle size distribution refers to values determined by dynamic light scattering according to the ISO 13321:1996 standard.

The particle size distribution of the copolymer particles contained in the polymer latex may be monomodal or almost monomodal, which means that the distribution function of the particle size has a single maximum and no particular shoulder. The particle size distribution of the copolymer particles contained in the polymer latex may also be polymodal or almost polymodal, which means that the distribution function of the particle size has at least two distinct maxima or at last one maximum and at least a pronounced shoulder.

If not stated otherwise, the size of the particles as well as the distribution of particle size is determined by quasielastic light scattering (QELS), also known as dynamic light scattering (DLS). The measurement method is described in the ISO 13321:1996 standard. The determination can be carried out using a High-Performance Particle Sizer (HPPS). For this purpose, a sample of the aqueous polymer latex will be diluted and the dilution will be analyzed. In the context of QELS, the aqueous dilution may have a polymer concentration in the range of 0.001 to 0.5% by weight, depending on the particle size. For most purposes, a proper concentration will be 0.01% by weight. However, higher or lower concentrations may be used to achieve an optimum signal/noise ratio. The dilution can be achieved by addition of the polymer latex to water or an aqueous solution of a surfactant in order to avoid flocculation. Usually, dilution is performed by using a 0.1% by weight aqueous solution of a non-ionic emulsifier, e.g. an ethoxylated C16/C18 alkanol (degree of ethoxylation of 18), as a diluent. Measurement configuration: HPPS from Malvern, automated, with continuousflow cuvette and Gilson autosampler. Parameters: measurement temperature 20.0°C; measurement time 120 seconds (6 cycles each of 20 s); scattering angle 173°; wavelength laser 633 nm (HeNe); refractive index of medium 1.332 (aqueous); viscosity 0.9546 mPa·s. The measurement gives an average value of the second order cumulant analysis (mean of fits), i.e. Z average. The "mean of fits" is an average, intensity-weighted hydrodynamic particle diameter in nm.

The hydrodynamic particle diameter can also be determined by Hydrodynamic Chromatography fractionation (HDC), as for example described by H. Wiese, "Characterization of Aqueous Polymer Dispersions" in Polymer Dispersions and Their Industrial Applications (Wiley-VCH, 2002), pp. 41-73. For further details, reference is made to the examples and the description below.

In particular, the polymer P has a glass transition temperature Tg in the range of -5 to +35°C, in particular in the range of 0 to +35°C, especially in the range of +5 to 35°C. In case of elastomeric coatings, the glass transition temperature may also be in the range of -30 to 0°C. In case of elastomeric coatings, the coating composition contains postcrosslinking additives in order to reduce tackiness of the coatings.

The glass transition temperatures Tg as referred to herein are the actual glass transition temperatures. The actual glass transition temperature can be determined experimentally by the differential scanning calorimetry (DSC) method according to ISO 11357-2:2013, preferably with sample preparation according to ISO 16805:2003.

The actual glass transition temperature depends from the monomer compositions forming the respective polymer phases (1) and (2), respectively, and a theoretical glass transition temperature can be calculated from the monomer composition used in the emulsion polymerization. The theoretical glass transition temperatures are usually calculated from the monomer composition by the Fox equation:

$$1/Tg^t = x_a/Tg_a + x_b/Tg_b + .... x_n/Tg_n,$$

In this equation $x_a$, $x_b$, .... $x_n$ are the mass fractions of the monomers a, b, .... n and $Tg_a$, $Tg_b$, .... $Tg_n$ are the actual glass transition temperatures in Kelvin of the homopolymers synthesized from only one of the monomers 1, 2, .... n at a time. The Fox equation is described by T. G. Fox in Bull. Am. Phys. Soc. 1956, 1, page 123 and as well as in Ullmann's Encyclopädie der technischen Chemie [Ullmann's Encyclopedia of Industrial Chemistry], vol. 19, p. 18, 4th ed., Verlag Chemie, Weinheim, 1980. The actual Tg values for the homopolymers of most monomers are known and listed, for example, in Ullmann's Encyclopädie der technischen Chemie [Ullmann's Encyclopedia of Industrial Chemistry], 5th ed., vol. A21, p. 169, Verlag Chemie, Weinheim, 1992. Further sources of glass transition temperatures of homopolymers are, for example, J. Brandrup, E. H. Immergut, Polymer Handbook, 1st Ed., J. Wiley, New York 1966, 2nd Ed. J. Wiley, New York 1975, 3rd Ed. J. Wiley, New York 1989 and 4th Ed. J. Wiley, New York 2004.

Usually, the theoretical glass temperature $Tg^t$ calculated according to Fox as described herein and the experimentally determined glass transition temperature as described herein are similar or even same and do not deviate from each other by more than 5 K, in particular they deviate not more than 2 K.

Preferably, the aqueous polymer dispersion has a minimum film forming temperature of not more than 30°C, in particular not more than 20°C. The minimum film forming temperature correlates with the glass transition temperature of the polymer P but may be typically somewhat lower, e.g. 1 to 5 K lower than the actual glass transition temperature Tg of the polymer P.

The aqueous polymer dispersions of the present invention generally have solids contents in the range of 30 to 75% by weight, preferably in the range of 40 to 65% by weight, in particular in the range of 45 to 60% by weight. The solids content describes the proportion of nonvolatile fractions and can be measured according to the standard method DIN EN ISO 3251: 2008-06. The solids content of a polymer dispersion may in particular be determined by means of a balance with infrared moisture analysis. In this determination, a quantity of polymer dispersion is introduced into the instrument, heated to 140°C and subsequently held at that temperature. As soon as the average decrease in weight falls below 1 mg within 140 seconds, the measurement procedure is ended. The ratio of weight after drying to original mass introduced gives the solids content of the polymer dispersion. The total solids content of the formulation is determined arithmetically from the amounts of the substances added and from their solids contents and concentrations.

The polymer dispersions may contain a crosslinking agent for achieving postcrosslinking of the polymer latex particles if the polymer in the polymer latex has functional groups which are complementary to the functional groups of the crosslinking agent. In this context, the term "complementary" is understood that the functional groups of the latex and the functional groups of the crosslinking agent are susceptible to undergo a chemical reaction which forms a chemical bond between the atoms of the respective functional groups. Typically, the crosslinking agent has at least two functional groups complementary to the functional groups of the polymer of the polymer latex. Examples of suitable crosslinking agents are described below.

Besides the polymer and the optional crosslinking agent, the aqueous polymer dispersions of the present invention may contain further ingredients conventionally present in aqueous polymer dispersions. These further ingredients are, for example, surface active compounds, such as emulsifiers und protective colloids, in particular those used in the production of the polymer dispersion, further defoamers and the like. Further ingredients may also be acids, bases, buffers, decomposition products from the polymerization reaction, deodorizing compounds, and chain transfer agents. The amount of the respective individual component will typically not exceed 1.5 wt%, based on the total weight of the polymer dispersion. The total amount of these stated components will typically not exceed 5 wt%, based on the total weight of the polymer dispersion.

It is a particular benefit of the invention, that the polymer dispersion does not require organic biocides for avoiding microbial spoilage, since the polymer dispersion can be stabilized simply by increasing its pH value to at least pH 9.5, in particular at least pH 10, especially at least pH 10.5. However, it is also possible to add small amounts of organic biocides, such as isothiazolinones, such as MIT, Cit, OIT and BIT, and formaldehyde releasers, such as bronopol (2-bromo-2-nitropropane-1,3-diol), or methylol urea. Preferably, the aqueous polymer dispersions do not contain any organic biocides or less than 100 ppm of organic biocides.

Preferably, the amount of volatile organic matter, i.e. the content of organic compounds with boiling points up to 250°C under standard conditions (101,325 kPa) as determined by ISO 17895:2005 via gas-chromatography is less than 0.5% by weight, in particular less than 0.2% by weight, based on the total weight of the polymer dispersion. Besides the polymer, the aqueous polymer dispersion also contains an aqueous phase, wherein the polymer particles of the polymer latex are dispersed. The aqueous phase, also termed serum, consists essentially of water and any water-soluble further ingredients. The total concentration of any further ingredient will typically not exceed 10 wt%, in particular 8% by weight, based on the total weight of the aqueous phase.

According to the invention, the aqueous polymer dispersion of the polymer P is used as a binder in waterborne coating compositions, which are in particular waterborne plaster formulations, waterborne primers and especially waterborne paint formulations which have a pH value of at least pH 10 and especially at least pH 10.5, e.g. to a pH

value in the range of pH 10 to pH 13.0, in particular in the range of pH 10 to pH 12.5, and especially in the range of pH 10.5 to pH 12.

The aqueous polymer dispersion of the polymer P may be used as the sole organic binder polymer in the waterborne coating formulations but it may also be used in combination with other organic binder polymers. Preferably, the relative amount of the polymer P in the waterborne coating formulations with respect to other organic binder polymers is at least 70% by weight, in particular at least 90% by weight or 100% by weight, based on the total weight of organic binder polymers present in the waterborne coating formulation.

The total amount of the polymer dispersion in the waterborne coating formulations may vary depending on the desired purpose and the desired recipe of the coating formulation in a known manner. In particular, the waterborne coating formulation contain the polymer dispersion of the polymer P in such amounts that the amount of polymer P in the waterborne coating formulation is in the range of 4 to 60 % by weight, based on the total amount of solids in the waterborne coating formulation.

Preferably, the waterborne coating formulations preferably contain at least one buffer for adjusting the pH value of the formulation to at least pH 10 and especially at least pH 10.5, e.g. to a pH value in the range of pH 10 to pH 13.0, in particular in the range of pH 10 to pH 12.5, and especially in the range of pH 10.5 to pH 12, as determined at 20°C and 1 bar. In combination with the buffer, a strong base, in particular an alkalimetal hydroxide, such as sodium hydroxide or potassium hydroxide may be used for adjusting the pH value of the waterborne coating formulations.

Suitable buffers include in particular water-soluble alkali silicates such as water glass, in particular kali waterglass, alkali methyl siliconates, in particular potassium siliconate, alkanolamines, such as triethanolamine, alkoxylated polyamines, such as propoxylated diaminoalkanes, e. g. N,N,N',N' tetrakis(2-hydroxypropyl)-1,6-diaminohexane, polylysine, calcium silicate hydrates such as xonotlite mineral, calcium aluminiate sulfate hydrates, such as ettringite minerals, lithium carbonate and combinations of alkalimetal hydroxides, such as sodium or potassium hydroxide, with aluminium silicate hydrates, such as kaolin. The amount of the aforementioned buffer will depend on the nature of the buffer and its buffer capacity. Some of the aforementioned inorganic buffers may also serve as fillers and thus may be present in comparatively high amounts.

In addition to the buffer or instead thereof, the waterborne paint formulations may contain strong bases for adjusting the pH value of the waterborne coating formulations, e. g. an alkalimetal hydroxide, such as sodium hydroxide or potassium hydroxide.

The waterborne paint formulations include both silicate paints, i.e. paints, where the amount of water soluble silicate binder or silica sol exceeds the amount of organic binder polymers, and conventional waterborne paints (latex paints), i.e. paints containing less than 4.5 wt.-% of water glass based on the total weight of the paint formulation and calculated as solids in the water glass. Conventional paints include both paints for interior use and masonry paints, i.e. paints for exterior application. Here the solids of the water glass relate to the total amount of $SiO_2$ and $M_2O$ (M = alkalimetal, in particular potassium) present in the water glass.

For example, waterborne silicate paints contain the polymer dispersion of the polymer P in such amounts that the amount of polymer P in the silica paint formulation is in the range of 4 to 10 % by weight while the amount of water glass is typically in the range of 4.5 to 20 % by weight, based in each case on the total amount of solids in the waterborne silicate paint formulation. Here, the amount of water glass refers to the solids content of the water glass. Typically, the amount of pigments and fillers in silicate paint formulations is in the range of 50 to 85% by weight, based on the solids content of the silica paint formulation. Typically, waterborne silica paints have a solids content in the range of 45 to 65 % by weight.

For example, waterborne plaster formulations contain the polymer dispersion of the polymer P in such amounts that the amount of polymer P in the plaster formulation is in the range of 4 to 10 % by weight, based on the total amount of solids in the waterborne plaster formulation. If the plaster formulation contains water glass, the amount of water glass is typically in the range of 2 to 15 % by weight, based on the total amount of solids in the waterborne plaster formulation. Here, the amount of water glass refers to the solids content of the water glass. Typically, the amount of pigments and fillers in plaster formulations is in the range of 75 to 95% by weight, based on the solids content of the plaster formulation. Typically, waterborne plaster formulations have a solids content in the range of 65 to 85 % by weight.

For example, conventional waterborne paint formulations contain the polymer dispersion of the polymer P in such amounts that the amount of polymer P in the paint formulation is in the range of 5 to 55 % by weight, based on the total amount of solids in the waterborne paint formulation. In addition to the polymer P the waterborne paint formulations may contain a buffer and optionally an alkalimetal hydroxide for adjusting the pH of the coating formulation. The buffer may be water glass, which then is typically present in an amount of less than 4.5% by weight, e.g. in the range of 0.5 to 4.5% by we, based on the solids content and calculated as solids of the water glass. Typically, the amount of pigments and fillers in paint formulations may be in the range of 20 to 85 % by weight, based on the solids content of the conventional waterborne formulation. Typically, conventional waterborne paint formulations have a solids content in the range of 45 to 70 % by weight. Instead or in combination of with water glass, the conventional waterborne paint formulations may contain another buffer, in particular one or more inorganic buffers, e. g. a buffer selected from calcium silicate hydrates such as xonotlite mineral, calcium aluminiate sulfate hydrates, such as ettringite minerals, lithium carbonate and combinations of

alkalimetal hydroxides, such as sodium or potassium hydroxide, with aluminium silicate hydrates, such as kaolin. These inorganic buffers may be part of the fillers.

The waterborne coating formulation may also be formulated as a primer. Primers can be used for preparation and/or improvement of surfaces before applying a top coat. These improvements can be related to consolidation of the surfaces of porous or absorbent substrates or as bonding aids for non-absorbent substrates. In case of primers for non-absorbent substrates, waterborne primer formulations similar to the paint formulations already mentioned are used. In the case of porous or absorbent substrates so called penetrating primers or clear impregnation coatings are used. These impregnation coatings stabilize the surface and typically contain a polymer dispersion to stabilize the water glass during silicification.

For example, clear impregnation coating formulations contain the polymer dispersion of the polymer P in such amounts that the amount of polymer P in the primer formulation is in the range of 0.3 to 10% by weight, based on the total weight of the primer formulations. The amount of polymer P is typically in the range of 4 to 10 % by weight, based on the total amount of solids in the waterborne primer formulation. In addition to the polymer P the clear impregnation coating formulations contain water glass typically in an amount of 5 to 20% by eight, based on the total weight of the primer formulation or 50 to 95% by weight, based on the solids content. Here, the amount of water glass refers to the total amount of $SiO_2$ and $M_2O$ (M = alkalimetal, in particular potassium) present in the water glass. Typically, the amount of fillers in primer formulations is less than 5% by weight, based on the solids content of the primer formulation. Typically, waterborne primer formulations have a solids content in the range of 10 to 30 % by weight.

Apart from that, the waterborne coating formulations may contain conventional fillers and pigments.

Typical pigments are, for example, titanium dioxide, preferably in the rutile form, barium sulfate, zinc oxide or lithopones (zinc sulfide + barium sulfate). For decorative purposes, the formulations may also comprise colored pigments, examples being iron oxides, carbon black, graphite, zinc yellow, zinc green, ultramarine, manganese black, antimony black, manganese violet, Paris blue or Schweinfurt green. The formulations may also comprise pigments, which reflect IR radiation, i.e. IR reflecting pigments, such as pigments based on Fe/Cr mixed oxides and titanium based mixed oxides, such as antimony nickel titanium oxides. Suitable fillers comprise aluminosilicates, such as feldspars, silicates, such as kaolin, talc, mica, magnesite, alkaline earth metal carbonates, such as calcium carbonate, in the form for example of calcite or chalk, magnesium carbonate, dolomite, alkaline earth metal sulfates, such as calcium sulfate, silicon dioxide, etc.

The proportion of the pigments and fillers in the waterborne coating compositions can be described in a manner known per se via the pigment volume concentration (PVC). The PVC describes the ratio of the volume of pigments (VP) and fillers (VF) relative to the total volume, consisting of the volumes of binder (VB), pigments (VP) and fillers (VF) in a dried coating film in percent: PVC = (VP + VF) x 100 / (VP + VF + VB).

Preferably, the PVC will not exceed a value of 85 and is in particular in the range from 0 to 85

The waterborne coating formulations may contain typical formulation auxiliaries. The total amount of typical formulation auxiliaries is usually in the range from 0.1 to 30% by weight, in particular in the range from 0.5 to 10% by weight of the waterborne coating composition. Conventional formulation auxiliaries include, but are not limited to pigment dispersants, wetting agents, rheology modifying agents, leveling agents, biocides, defoamers, antifreeze agents, flow promoters and film-forming auxiliaries. Further suitable formulation auxiliaries and components are e.g. described by J. Bieleman in "Additives for Coatings", Wiley-VCH, Weinheim 2000; by T. C. Patton in "Paint Flow and Pigment Dispersions", 2. Edition, John Wiley & Sons 1978; and by M. Schwartz and R. Baumstark in "Water based Acrylates for Decorative Coatings", Curt R. Vincentz Verlag, Hanover 2001.

It is a particular benefit of the invention that the waterborne coating formulations do not require organic biocides for avoiding microbial spoilage, since their pH value is at least pH 9.5, in particular at least pH 10, especially at least pH 10.5. However, it is also possible to ad small amounts of organic biocides, such as isothiazolinones, such as MIT, CIT, OIT and BIT, bronopol (2-bromo-2-nitropropane-1,3-diol), or formaldehyde releasers, such as methylol urea, and pyrithiones, as so-called filming biocides. Preferably, the aqueous polymer latex and the waterborne coating formulations do not any organic biocides or less than 100 ppm, in particular 50 ppm, and especially less than 2 ppm on a weight basis of organic biocides. More preferably, the total amount of organic biocides in the polymer latex and in the waterborne coating formulation is below 50 ppm and the total amount of monocyclic isothiazolinones is below 1.5 ppm.

The waterborne coating formulations of the present invention can be used for permanently coating substrates and the invention accordingly also relates to a method for producing a permanent coating on a surface of a substrate. The method comprises

(a) applying the waterborne coating formulation according to the invention to a surface to be coated, and
(b) allowing the formulation to dry to produce the permanent coating.

The waterborne coating formulations can be applied to surfaces and/or substrates to be coated in a customary manner, such as, for example, by applying the waterborne coating formulations with brushes or rolls, by spraying, by dipping, by rolling, by curtain coating or by bar coating. The coating of surfaces and/or substrates is effected in such a way

that the surface and/or substrate is first coated with a formulation of the invention and then the wet coating is subjected to a drying step. The drying step is typically carried out at temperatures in the range of +5 to +80°C and in particular in the range of +10 to +70°C. Typically, temperatures of +5 to+ 25°C will be sufficient to achieve an acceptable permanent coating. However, higher temperatures will accelerate the drying speed, and temperatures of up to +80°C or up to +70°C may also be suitable.

Principally, the waterborne coating formulations of the present invention can be applied to any substrate, which is conventionally coated by waterborne coating compositions. The waterborne coating formulations can be applied to surfaces, such as, for example, metal, asphalt, concrete, fiber cement boards, stone, ceramic, minerals, wood, paper, plastic, polymer, and glass. The waterborne coating formulations can be applied to interior or exterior surfaces, such as, for example, an architectural surface, such as a roof, a wall, a floor and a ceiling. The waterborne coating formulations of the present invention are also suitable for coating of mineral substrates including stone walls and concrete surfaces such as shaped mineral articles including roof tiles and fiber cement boards. Due to the alkali stability, the waterborne coating formulations can also be applied to wet concrete surfaces.

## A Abbreviations:

| | |
|---|---|
| AA | acrylic acid |
| AM | acrylamide |
| AMPS | 2-acrylamidop-2-methylpropane sulfonic acid |
| BA | n-butyl acrylate |
| d | day |
| DN | Degree of neutralization |
| EHA | 2-ethylhexyl acrylate |
| DLS | dynamic light scattering, also termed quasi-elastic light scattering (QLS) |
| DSC | differential Scanning Calorimetry |
| MMA | methyl methacrylate |
| MAA | methacrylic acid |
| MEMO | 3-Methacryloxypropyltrimethoxysilane |
| NA | not available |
| RT | room temperature (23°C) |
| S | styrene |
| wt.-% | % by weight |

## B Starting materials for polymer dispersions

Defoamer: 20 wt.-% aqueous emulsion of a polyethersiloxane containing fumed silica (Tego® Foamex 822 of Evonik)

Emulsifier A: 27 wt.-% aqueous solution of the sodium salt of a polyethylene glycol - $C_{12}$-$C_{14}$ alkyl ether sulphate (2 ethylene glycol repetition units on average).

Emulsifier B: 15 wt.-% aqueous solution of the sodium dodecyl sulfate.

Seed latex: Aqueous polymer dispersion of a 30 nm polystyrene polymer having a Z average particle size of 30 nm and solids content of 33.00 wt.-%.

For stability assessment of the polymer dispersion, a potassium silicate water glass (hereinafter kali water glass) having a SiO2/K2O ratio of about 4 and 29 wt.-% solids content was used, e.g. Trasol® KW-N.

## C Characterization methods for polymer dispersions and their mixtures with waterglass

i) Solids contents of the polymer dispersions were measured according to the standard method DIN EN ISO 3251: 2008-06.

ii) pH values of the polymer dispersions, their mixtures with alkaline buffers (e.g. water glass) and binder-containing formulations were measured according to the standard method DIN EN 1262:2004-01.

iii) The glass transition temperature was determined by the DSC method (20 K/min, midpoint measurement, DIN 53765:1994-03) by means of a DSC instrument (Q 2000 series from TA instruments).

iv) Particle Size Distribution of Polymer Dispersion by DLS

The particle diameter of the polymer dispersion was determined by dynamic light scattering (DLS) of an aqueous polymer dispersion diluted with deionized water to 0.001 to 0.5% by weight at 22°C by means of a HPPS from Malvern Instruments, England. What is reported is the cumulant Z average diameter calculated from the measured autocorrelation function (ISO Standard 13321).

v) Particle Size Distribution of Polymer Dispersion by HDC

Measurements were carried out using a PL-PSDA particle size distribution analyzer (Polymer Laboratories, Inc.). A small amount of sample of the polymer dispersion was injected into an aqueous eluent containing an emulsifier, resulting in a concentration of approximately 0.5 g/l. The mixture was pumped through a glass capillary tube of approximately 15 mm diameter packed with polystyrene spheres. As determined by their hydrodynamic diameter, smaller particles can sterically access regions of slower flow in capillaries, such that on average the smaller particles experience slower elution flow. The fractionation was finally monitored using an UV-detector, which measured the extinction at a fixed wavelength of 254 nm.

vi) Rheology of polymer dispersions, mixtures with alkaline buffers (e.g. water glass) were measured using a rotational viscosimeter (Anton Paar MCR 302 or Anton Paar MCR 102) in cone-plate geometry (cone with order number CO50-1 having 50 μm gap width and an angle of 1°) at a shear rate of 1.2 s-1 and 22°C according to DIN 1342-3. The evaluation was done by determination of the relative viscosity (R) at a shear rate of 1.2 1/s, defined as R = (Viscosity after 14 days or 28 days at 50°C) / (Viscosity 1 d at RT) and the extent of pH drop, dpH = (pH after 14 days or 28 days at 50°C) - (pH 1 d at RT). In coagulated samples that are inhomogeneous due to coagulation meaningful viscosity or pH measurements are not possible. In these cases viscosity and pH are denoted as NA (not available).

## D Preparation Examples

Preparation Example D1

The polymer dispersion D1 was prepared according to the following protocol:

Emulsion A was prepared by mixing 103.00 g of emulsifier A, 23.00 g of emulsifier B, 23.00 g of methacrylic acid, 437.00 g of methyl methacrylate, 361.79 g of n-butyl acrylate, 181.00 g of 2-ethyl-hexyl acrylate, 147.00 g of styrene, 108.10 g of an aqueous sodium hydroxide solution (5 wt.-%), and 381.00 g of deionized water.

Initiator Solution I was prepared by dissolving 4.59 g of sodium peroxodisulfate in 61.12 g of deionized water.

Oxidation Solution O was prepared by dissolving 3.68 g of t-butyl hydroperoxide in 33.12 g of deionized water.

Reduction Solution R was prepared by dissolving 3.22 g of sodium bisulfite in 20.16 g of deionized water mixed with 1.20 g of acetone.

A reaction vessel, equipped with a stirrer and three separate feeding lines, was charged with 263.41 g of deionized water and 19.17 g of seed latex and pre-heated to 85°C. After reaching the reaction temperature of 85°C, feeding of Emulsion A into the reaction vessel was started and the emulsion A was fed into the reaction vessel within 180 minutes while maintaining the temperature of 85°C. In parallel, starting at the same time as the feed of Emulsion A but from a spatially separated feeding vessel, Initiator Solution I was fed into the reaction vessel within 180 minutes. After the end of the addition of Emulsion A and Initiator Solution I, the emulsion vessel was rinsed with 32.89 g of deionized water and the reaction vessel stirred for an additional 30 minutes. Afterwards, 1.15 g of defoamer and 46.81 g of deionized water were added. At this point, a sample of the polymer dispersion had a pH of 6.6.

After the addition of defoamer, starting at the same time but from two spatially separated feeding vessels, Oxidation Solution O and Reduction Solution R were fed into the reaction vessel at 85°C in 120 minutes. 30 minutes after the start of the Oxidation Solution O and Reduction Solution R addition, 50.60 g of an aqueous sodium hydroxide solution (5 wt.-%) and 56.81 g of deionized water were added to the reaction vessel and the vessel was cooled to 25°C. At this point, a sample of the polymer dispersion had a pH of 6.8.

The pH value of the final dispersion was 7.2 The solids content of the final dispersion was 50.2%. The particle diameter as measured by DLS was 155 nm.

Preparation Example D2

The polymer dispersion D2 was prepared according to protocol of preparation example D1 with the following amendment:

Emulsion A was prepared by mixing 103.00 g of emulsifier A, 23.00 g of emulsifier B, 28.75 g of acrylic acid, 437.00 g of

methyl methacrylate, 356.04 g of n-butyl acrylate, 180.78 g of 2-ethyl-hexyl acrylate, 147.43 g of styrene, 223.10 g of an aqueous sodium hydroxide solution (5 wt.-%), and 276.99 g of deionized water.

The pH value of the final dispersion was 7.1. The solids content of the final dispersion was 50.1%. The particle diameter as measured by DLS was 199 nm.

Preparation Example D3

The polymer dispersion D3 was prepared according to protocol of preparation example D1 with the following amendments:
Emulsion A was prepared by mixing 111.61 g of emulsifier A, 25.00 g of emulsifier B, 21.25 g of acrylic acid, 475.00 g of methyl methacrylate, 397.00 g of n-butyl acrylate, 196.50 g of 2-ethyl-hexyl acrylate, 160.25 g of styrene, 117.50 g of an aqueous sodium hydroxide solution (5 wt.-%), and 454.40 g of deionized water.

The Initiator Solution I was prepared by dissolving 5.00 g of sodium peroxodisulfate in 64.29 g of deionized water.

30 minutes after the start of the Oxidation Solution O and Reduction Solution R addition, 70.60 g of an aqueous sodium hydroxide solution (5 wt.-%) and 56.81 g of deionized water were added to the reaction vessel and the vessel was cooled to 25°C.

The pH value of the final dispersion was 7.3. The solids content of the final dispersion was 50.5%. The particle diameter as measured by DLS was 170 nm.

Preparation Example D4

The polymer dispersion D4 was prepared according to the following protocol:
Emulsion A was prepared by mixing 71.43 g of emulsifier A, 16.00 g of emulsifier B, 13.60 g of acrylic acid, 384.80 g of methyl methacrylate, 401.60 g of n-butyl acrylate, 75.20 g of an aqueous sodium hydroxide solution (5 wt.-%), and 285.60 g of deionized water.

Initiator Solution I was prepared by dissolving 3.19 g of sodium peroxodisulfate in 42.51 g of deionized water.

Oxidation Solution O was prepared by dissolving 3.68 g of t-butyl hydroperoxide in 33.12 g of deionized water.

Reduction Solution R was prepared by dissolving 3.22 g of sodium bisulfite in 20.16 g of deionized water mixed with 1.20 g of acetone.

A reaction vessel, equipped with a stirrer and three separate feeding lines, was charged with 183.41 g of deionized water and 13.33 g of seed latex and pre-heated to 85°C. After reaching the reaction temperature of 85°C, feeding of Emulsion A into the reaction vessel was started and the emulsion A was fed into the reaction vessel within 180 minutes while maintaining the temperature of 85°C. In parallel, starting at the same time as the feed of Emulsion A but from a spatially separated feeding vessel, Initiator Solution I was fed into the reaction vessel within 180 minutes. After the end of the addition of Emulsion A and Initiator Solution I, the emulsion vessel was rinsed with 32.89 g of deionized water and the reaction vessel stirred for an additional 30 minutes. Afterwards, 1.15 g of defoamer and 46.81 g of deionized water were added.

After the addition of defoamer, starting at the same time but from two spatially separated feeding vessels, Oxidation Solution O and Reduction Solution R were fed into the reaction vessel at 85°C in 120 minutes. 30 minutes after the start of the Oxidation Solution O and Reduction Solution R addition, 12.80 g of an aqueous sodium hydroxide solution (5 wt.-%) and 39.95 g of deionized water were added to the reaction vessel and the vessel was cooled to 25°C.

The pH value of the final dispersion was 7.1. The solids content of the final dispersion was 50.4%. The particle diameter as measured by DLS was 160 nm.

Preparation Example D5

The polymer dispersion D5 was prepared according to protocol of preparation example D4 with the following amendments:
Emulsion A was prepared by mixing 71.43 g of emulsifier A, 16.00 g of emulsifier B,16.00 g of methacrylic acid, 380.80 g of methyl methacrylate, 403.20 g of n-butyl acrylate, 75.20 g of an aqueous sodium hydroxide solution (5 wt.-%), and 264.88 g of deionized water.

30 minutes after the start of the Oxidation Solution O and Reduction Solution R addition, 35.20 g of an aqueous sodium hydroxide solution (5 wt.-%) and 32.89 g of deionized water were added to the reaction vessel and the vessel was cooled to 25°C.

The pH value of the final dispersion was 7.6. The solids content of the final dispersion was 50.8%. The particle diameter as measured by DLS was 156 nm.

Preparation Example D6

The polymer dispersion D6 was prepared according to protocol of preparation example D1 with the following amendments:
Emulsion A was prepared by mixing 111.61 g of emulsifier A, 25.00 g of emulsifier B, 25.00 g of methacrylic acid, 635.25 g of methyl methacrylate, 393.25 g of n-butyl acrylate, 196.50 g of 2-ethyl-hexyl acrylate, 117.50 g of an aqueous sodium hydroxide solution (5 wt.-%), and 413.87 g of deionized water.
The Initiator Solution I was prepared by dissolving 5.00 g of sodium peroxodisulfate in 66.43 g of deionized water.
The reaction vessel was charged with 283.41 g of deionized water and 20.83 g of seed latex.
30 minutes after the start of the Oxidation Solution O and Reduction Solution R addition, 55.60 g of an aqueous sodium hydroxide solution (5 wt.-%) and 61.75 g of deionized water were added to the reaction vessel and the vessel was cooled to 25°C.
The pH value of the final dispersion was 7.7. The solids content of the final dispersion was 49.9%. The particle diameter as measured by DLS was 161 nm.

Preparation Example D7

The polymer dispersion D7 was prepared according to protocol of preparation example D1 with the following amendments:
Emulsion A was prepared by mixing 111.61 g of emulsifier A, 25.00 g of emulsifier B, 6.00 g of acrylic acid, 635.25 g of methyl methacrylate, 412.00 g of n-butyl acrylate, 196.50 g of 2-ethyl-hexyl acrylate, 150.00 g of an aqueous sodium hydroxide solution (5 wt.-%), and 384.49 g of deionized water.
The Initiator Solution I was prepared by dissolving 5.00 g of sodium peroxodisulfate in 66.43 g of deionized water.
30 minutes after the start of the Oxidation Solution O and Reduction Solution R addition, 111.40 g of deionized water were added to the reaction vessel and the vessel was cooled to 25°C.
The pH value of the final dispersion was 6.8. The solids content of the final dispersion was 48.5%. The particle diameter as measured by DLS was 162 nm.

Preparation Example D8

The polymer dispersion D8 was prepared according to protocol of preparation example D1 with the following amendments:
Emulsion A was prepared by mixing 111.61 g of emulsifier A, 25.00 g of emulsifier B, 21.25 g of acrylic acid, 635.25 g of methyl methacrylate, 397.00 g of n-butyl acrylate, 196.50 g of 2-ethyl-hexyl acrylate, 117.50 g of an aqueous sodium hydroxide solution (5 wt.-%), and 454.40 g of deionized water.
The Initiator Solution I was prepared by dissolving 5.00 g of sodium peroxodisulfate in 66.43 g of deionized water.
30 minutes after the start of the Oxidation Solution O and Reduction Solution R addition, 65.00 g of an aqueous sodium hydroxide solution (5 wt.-%) and 61.18 g of deionized water were added to the reaction vessel and the vessel was cooled to 25°C. At this point, a sample of the polymer dispersion had a pH of 5.8.
The pH value of the final dispersion was 7.4. The solids content of the final dispersion was 48.2%. The particle diameter as measured by DLS was 164 nm.

Preparation Example D9

The polymer dispersion D9 was prepared according to protocol of preparation example D4 with the following amendments:
Emulsion A was prepared by mixing 71.43 g of emulsifier A, 16.00 g of emulsifier B, 4.00 g of methacrylic acid, 394.25 g of methyl methacrylate, 401.60 g of n-butyl acrylate, 96.00 g of an aqueous sodium hydroxide solution (5 wt.-%), and 246.07 g of deionized water.
The reaction vessel was charged with 201.43 g of deionized water and 13.33 g of seed latex.
30 minutes after the start of the Oxidation Solution O and Reduction Solution R addition, 71.29 g of deionized water were added to the reaction vessel and the vessel was cooled to 25°C.
The pH value of the final dispersion was 7.0. The solids content of the final dispersion was 50.6%. The particle diameter as measured by DLS was 159 nm.

Preparation Example D10

The polymer dispersion D10 was prepared according to protocol of preparation example D1 with the following

amendments:
Emulsion A was prepared by mixing 111.61 g of emulsifier A, 25.00 g of emulsifier B, 6.25 g of acrylic acid, 475.00 g of methyl methacrylate, 412.00 g of n-butyl acrylate, 196.50 g of 2-ethyl-hexyl acrylate, 160.25 g of styrene, 150.00 g of an aqueous sodium hydroxide solution (5 wt.-%), and 384.49 g of deionized water.

The Initiator Solution I was prepared by dissolving 5.00 g of sodium peroxodisulfate in 66.43 g of deionized water.

The reaction vessel was charged with 286.41 g of deionized water and 20.83 g of seed latex.

30 minutes after the start of the Oxidation Solution O and Reduction Solution R addition, 111.40 g of deionized water were added to the reaction vessel and the vessel was cooled to 25°C.

The pH value of the final dispersion was 6.9. The solids content of the final dispersion was 51.5%. The particle diameter as measured by DLS was 158 nm.

Preparation Example D11

The polymer dispersion D11 was prepared according to protocol of preparation example D1 with the following amendments:
Emulsion A was prepared by mixing 102.68 g of emulsifier A, 23.00 g of emulsifier B, 23.00 g of methacrylic acid, 437.00 g of methyl methacrylate, 361.79 g of n-butyl acrylate, 180.78 g of 2-ethyl-hexyl acrylate, 147.43 g of styrene, 151.80 g of an aqueous sodium hydroxide solution (5 wt.-%), and 341.33 g of deionized water.

30 minutes after the start of the Oxidation Solution O and Reduction Solution R addition, 20.00 g of an aqueous sodium hydroxide solution (5 wt.-%) and 56.81 g of deionized water were added to the reaction vessel and the vessel was cooled to 25°C.

The pH value of the final dispersion was 7.1. The solids content of the final dispersion was 50.9%. The particle diameter as measured by DLS was 155 nm.

Preparation Example D12

The polymer dispersion D12 was prepared according to protocol of preparation example D1 with the following amendments:
Emulsion A was prepared by mixing 102.61 g of emulsifier A, 23.00 g of emulsifier B, 5.75 g of methacrylic acid, 437.00 g of methyl methacrylate, 379.04 g of n-butyl acrylate, 181.78 g of 2-ethyl-hexyl acrylate, 147.43 g of styrene, 64.89 g of an aqueous sodium hydroxide solution (5 wt.-%), and 419.77 g of deionized water.

30 minutes after the start of the Oxidation Solution O and Reduction Solution R addition, 60.60 g of an aqueous sodium hydroxide solution (5 wt.-%) and 47.79 g of deionized water were added to the reaction vessel and the vessel was cooled to 25°C.

The pH value of the final dispersion was 7.6. The solids content of the final dispersion was 52.2%. The particle diameter as measured by DLS was 152 nm.

Preparation Example D13

The polymer dispersion D13 was prepared according to the following protocol:

Emulsion A was prepared by mixing 51.34 g of emulsifier A, 11.50 g of emulsifier B, 11.50 g of methacrylic acid, 218.50 g of methyl methacrylate, 180.90 g of n-butyl acrylate, 90.39 g of 2-ethylhexyl acrylate, 73.72 of styrene and 190.38 g of deionized water.

Emulsion B was prepared by mixing 51.34 g of emulsifier A, 11.50 g of emulsifier B, 11.50 g of methacrylic acid, 218.50 g of methyl methacrylate, 180.90 g of n-butyl acrylate, 90.39 g of 2-ethylhexyl acrylate, 73.72 of styrene, 108.10 g of an aqueous sodium hydroxide solution (5 wt.-%), and 190.38 g of deionized water.

Initiator Solution I was prepared by dissolving 4.59 g of sodium peroxodisulfate in 61.12 g of deionized water.

Oxidation Solution O was prepared by dissolving 3.68 g of t-butyl hydroperoxide in 33.12 g of deionized water.

Reduction Solution R was prepared by dissolving 3.22 g of sodium bisulfite in 20.16 g of deionized water mixed with 1.20 g of acetone.

A reaction vessel, equipped with a stirrer and three separate feeding lines, was charged with 263.41 g of deionized water and 19.17 g of seed latex and pre-heated to 85°C. After reaching the reaction temperature of 85°C, feeding of Emulsion A into the reaction vessel was started and the emulsion was fed into the reaction vessel within 90 minutes. In parallel, starting at the same time as the feed of Emulsion A but from a spatially separated feeding vessel, Initiator Solution I was fed into the reaction vessel within 180 minutes while maintaining the temperature of 85°C.

Immediately after feeding of emulsion A was terminated feeding of Emulsion B into the reaction vessel was started and the emulsion was fed into the reaction vessel within 90 minutes while maintaining the temperature of 85°C. After the end of the addition of Emulsion B and Initiator Solution I, the emulsion vessel was rinsed with 32.89 g of deionized water and the reaction vessel stirred for an additional 30 minutes. Afterwards, 1.15 g of defoamer and 46.81 g of deionized water were added.

After the addition of defoamer, starting at the same time but from two spatially separated feeding vessels, Oxidation Solution O and Reduction Solution R were fed into the reaction vessel at 85°C in 120 minutes. 30 minutes after the start of the Oxidation Solution O and Reduction Solution R addition, 10.00 g of an aqueous sodium hydroxide solution (5 wt.-%) and 93.44 g of deionized water were added to the reaction vessel and the vessel was cooled to 25°C. At this point, a sample of the polymer dispersion had a pH of 6.9.

The pH value of the final dispersion was 7.2. The solids content of the final dispersion was 52.2%. The particle diameter as measured by DLS was 156 nm.

Preparation Example D14

The polymer dispersion D14 was prepared according to protocol of preparation example D13 with the following amendments:

Emulsion A was prepared by mixing 51.34 g of emulsifier A, 11.50 g of emulsifier B, 11.50 g of methacrylic acid, 218.50 g of methyl methacrylate, 180.90 g of n-butyl acrylate, 90.39 g of 2-ethylhexyl acrylate, 73.72 of styrene, 54.05 g of an aqueous sodium hydroxide solution (5 wt.-%), and 190.38 g of deionized water.

Emulsion B was prepared by mixing 51.34 g of emulsifier A, 11.50 g of emulsifier B, 11.50 g of methacrylic acid, 218.50 g of methyl methacrylate, 180.90 g of n-butyl acrylate, 90.39 g of 2-ethylhexyl acrylate, 73.72 of styrene and 190.38 g of deionized water.

Before the feeding of the Oxidation Solution O and Reduction Solution R the polymer dispersion showed a pH value of 6.0.

30 minutes after the start of the Oxidation Solution O and Reduction Solution R addition, 54.80 g of an aqueous sodium hydroxide solution (5 wt.-%) and 101.78 g of deionized water were added to the reaction vessel and the vessel was cooled to 25°C. At this point, a sample of the polymer dispersion had a pH of 6.5.

The pH value of the final dispersion was 6.9. The solids content of the final dispersion was 51.2%. The particle diameter as measured by DLS was 155 nm.

Preparation Example D15

The polymer dispersion D15 was prepared according to protocol of preparation example D1 with the following amendments:
Emulsion A was prepared by mixing 102.86 g of emulsifier A, 23.00 g of emulsifier B, 23.00 g of methacrylic acid, 437.00 g of methyl methacrylate, 361.79 g of n-butyl acrylate, 180.78 g of 2-ethyl-hexyl acrylate, 147.43 g of styrene, 75.90 g of an aqueous sodium hydroxide solution (5 wt.-%), and 409.81 g of deionized water.

30 minutes after the start of the Oxidation Solution O and Reduction Solution R addition, 50.60 g of an aqueous sodium hydroxide solution (5 wt.-%) and 56.81 g of deionized water were added to the reaction vessel and the vessel was cooled to 25°C.

The pH value of the final dispersion was 7.4. The solids content of the final dispersion was 50.5%. The particle diameter as measured by DLS was 158 nm.

Preparation Example D16

The polymer dispersion D16 was prepared according to protocol of preparation example D1 with the following amendments:
Emulsion A was prepared by mixing 111.61 g of emulsifier A, 25.00 g of emulsifier B, 21.25 g of acrylic acid, 475.00 g of methyl methacrylate, 397.00 g of n-butyl acrylate, 196.50 g of 2-ethyl-hexyl acrylate, 160.25 g of styrene, 82.25 g of an aqueous sodium hydroxide solution (5 wt.-%), and 454.40 g of deionized water.

The Initiator Solution I was prepared by dissolving 5.00 g of sodium peroxodisulfate in 66.43 g of deionized water.

The reaction vessel was charged with 283.32 g of deionized water and 20.83 g of seed latex.

30 minutes after the start of the Oxidation Solution O and Reduction Solution R addition, 85.00 g of an aqueous sodium hydroxide solution (5 wt.-%) and 61.80 g of deionized water were added to the reaction vessel and the vessel was

cooled to 25°C.

The pH value of the final dispersion was 7.3. The solids content of the final dispersion was 50.5%. The particle diameter as measured by DLS was 165 nm.

Preparation Example VD1 (not according to the invention)

The polymer dispersion VD1 was prepared according to protocol of preparation example D1 with the following amendments:

Emulsion A was prepared by mixing 102.86 g of emulsifier A, 23.00 g of emulsifier B, 23.00 g of methacrylic acid, 437.00 g of methyl methacrylate, 361.79 g of n-butyl acrylate, 180.78 g of 2-ethyl-hexyl acrylate, 147.43 g of styrene and 409.77 g of deionized water.

30 minutes after the start of the Oxidation Solution O and Reduction Solution R addition, 61.75 g of an aqueous sodium hydroxide solution (5 wt.-%) and 112.90 g of deionized water were added to the reaction vessel and the vessel was cooled to 25°C.

The pH value of the final dispersion was 7.3. The solids content of the final dispersion was 50.3%. The particle diameter as measured by DLS was 156 nm.

Preparation Example VD2 (not according to the invention)

The polymer dispersion VD2 was prepared according to protocol of preparation example D1 with the following amendments:

Emulsion A was prepared by mixing 111.61 g of emulsifier A, 25.00 g of emulsifier B, 31.25 g of acrylic acid, 475.00 g of methyl methacrylate, 387.00 g of n-butyl acrylate, 196.50 g of 2-ethyl-hexyl acrylate, 160.25 g of styrene, and 454.40 g of deionized water.

The Initiator Solution I was prepared by dissolving 5.00 g of sodium peroxodisulfate in 66.43 g of deionized water.

The reaction vessel was charged with 286.32 g of deionized water and 20.83 g of seed latex.

30 minutes after the start of the Oxidation Solution O and Reduction Solution R addition, 147.50 g of an aqueous sodium hydroxide solution (5 wt.-%) and 61.80 g of deionized water were added to the reaction vessel and the vessel was cooled to 25°C.

The pH value of the final dispersion was 7.1. The solids content of the final dispersion was 51.0%. The particle diameter as measured by DLS was 156 nm.

Preparation Example VD3 (not according to the invention)

The polymer dispersion VD3 was prepared according to protocol of preparation example D1 with the following amendments:

Emulsion A was prepared by mixing 111.61 g of emulsifier A, 25.00 g of emulsifier B, 21.25 g of acrylic acid, 475.00 g of methyl methacrylate, 397.00 g of n-butyl acrylate, 196.50 g of 2-ethyl-hexyl acrylate, 160.25 g of styrene, and 454.40 g of deionized water.

The Initiator Solution I was prepared by dissolving 5.00 g of sodium peroxodisulfate in 66.43 g of deionized water.

The reaction vessel was charged with 286.41 g of deionized water and 20.83 g of seed latex.

30 minutes after the start of the Oxidation Solution O and Reduction Solution R addition 137.50 g of an aqueous sodium hydroxide solution (5 wt.-%) and 61.80 g of deionized water were added to the reaction vessel and the vessel was cooled to 25°C.

The pH value of the final dispersion was 7.9. The solids content of the final dispersion was 50.2%. The particle diameter as measured by DLS was 159 nm.

Preparation Example VD4 (not according to the invention)

The polymer dispersion VD4 was prepared according to protocol of preparation example D1 with the following amendments:

Emulsion A was prepared by mixing 71.43 g of emulsifier A, 16.00 g of emulsifier B, 13.60 g of acrylic acid, 384.80 g of methyl methacrylate, 401.60 g of n-butyl acrylate, and 285.06 g of deionized water.

The Initiator Solution I was prepared by dissolving 3.19 g of sodium peroxodisulfate in 42.51 g of deionized water.

The reaction vessel was charged with 183.24 g of deionized water and 13.33 g of seed latex.

30 minutes after the start of the Oxidation Solution O and Reduction Solution R addition 88.60 g of an aqueous sodium hydroxide solution (5 wt.-%) and 39.55 g of deionized water were added to the reaction vessel and the vessel was cooled to 25°C.

The pH value of the final dispersion was 8.1. The solids content of the final dispersion was 50.5%. The particle diameter as measured by DLS was 156 nm.

Preparation Example VD5 (not according to the invention)

The polymer dispersion VD5 was prepared according to protocol of preparation example VD4 with the following amendments:
Emulsion A was prepared by mixing 71.43 g of emulsifier A, 16.00 g of emulsifier B, 16.00 g of methacrylic acid, 380.80 g of methyl methacrylate, 403.20 g of n-butyl acrylate, and 285.06 g of deionized water.
30 minutes after the start of the Oxidation Solution O and Reduction Solution R addition 42.96 g of an aqueous sodium hydroxide solution (5 wt.-%) and 78.54 g of deionized water were added to the reaction vessel and the vessel was cooled to 25°C.
The pH value of the final dispersion was 7.1. The solids content of the final dispersion was 50.2%. The particle diameter as measured by DLS was 155 nm.

Preparation Example VD6 (not according to the invention)

The polymer dispersion VD6 was prepared according to protocol of preparation example VD4 with the following amendments:
Emulsion A was prepared by mixing 71.43 g of emulsifier A, 16.00 g of emulsifier B, 16.00 g of methacrylic acid, 406.56 g of methyl methacrylate, 251.68 g of n-butyl acrylate, 125.76 g of 2-ethylhexyl acrylate and 285.06 g of deionized water.
30 minutes after the start of the Oxidation Solution O and Reduction Solution R addition 42.96 g of an aqueous sodium hydroxide solution (5 wt.-%) and 78.58 g of deionized water were added to the reaction vessel and the vessel was cooled to 25°C.
The pH value of the final dispersion was 7.2. The solids content of the final dispersion was 50.6%. The particle diameter as measured by DLS was 160 nm.

Preparation Example VD7 (not according to the invention)

The polymer dispersion VD7 was prepared according the following protocol:
Emulsion A was prepared by mixing 111.61 g of emulsifier A, 25.00 g of emulsifier B, 12.99 g of acrylic acid, 16.00 of acrylamide, 406.00 g of methyl methacrylate, 657.13 g of n-butyl acrylate, 208.00 g of styrene, and 475.03 g of deionized water.
The Initiator Solution I was prepared by dissolving 6.37 g of sodium peroxodisulfate in 84.63 g of deionized water.
Oxidation Solution O was prepared by dissolving 3.68 g of t-butyl hydroperoxide in 33.12 g of deionized water.
Reduction Solution R was prepared by dissolving 3.22 g of sodium bisulfite in 20.16 g of deionized water mixed with 1.20 g of acetone.
A reaction vessel, equipped with a stirrer and three separate feeding lines, was charged with 431.46 g of deionized water and 47.27 g of seed latex and pre-heated to 85°C. After reaching the reaction temperature of 85°C, feeding of Emulsion A into the reaction vessel was started and the emulsion was fed into the reaction vessel within 150 minutes while maintaining the temperature of 85°C. In parallel, starting at the same time as the feed of Emulsion A but from a spatially separated feeding vessel, Initiator Solution I was fed into the reaction vessel within 155 minutes. After the end of the addition of Emulsion A and Initiator Solution I, the emulsion vessel was rinsed with 32.89 g of deionized water and the reaction vessel stirred for an additional 30 minutes. Afterwards, 1.15 g of defoamer and 46.81 g of deionized water were added.
After the addition of defoamer, starting at the same time but from two spatially separated feeding vessels, Oxidation Solution O and Reduction Solution R were fed into the reaction vessel at 85°C in 120 minutes. 30 minutes after the start of the Oxidation Solution O and Reduction Solution R addition, 50.60 g of an aqueous sodium hydroxide solution (5 wt.-%) and 56.81 g of deionized water were added to the reaction vessel and the vessel was cooled to 25°C.
The pH value of the final dispersion was 7.5. The solids content of the final dispersion was 51.5%. The particle diameter as measured by DLS was 130 nm.

Preparation Example VD8 (not according to the invention)

The polymer dispersion VD8 was prepared according the following protocol:
Emulsion A was prepared by mixing 51.03 g of emulsifier A, 14.87 g of emulsifier B, 8.17 g of acrylic acid, 9.90 of acrylamide, 288.00 g of methyl methacrylate, 288.00 g of 2-ethylhexyl acrylate and 371.15 g of deionized water.
The Initiator Solution I was prepared by dissolving 0.71 g of sodium peroxodisulfate in 9.94 g of deionized water.

Oxidation Solution O was prepared by dissolving 3.68 g of t-butyl hydroperoxide in 33.12 g of deionized water.

Reduction Solution R was prepared by dissolving 3.22 g of sodium bisulfite in 20.16 g of deionized water mixed with 1.20 g of acetone.

A reaction vessel, equipped with a stirrer and three separate feeding lines, was charged with 181.97 g of deionized water and 17.03 g of emulsifier and pre-heated to 95°C. After reaching the reaction temperature of 95°C, 5 wt.-% of emulsion A was added to the reaction vessel followed by the addition of 0.26 g of sodium peroxodisulfate dissolved in 3.57 g of deionized water. The temperature was maintained and the mixture was allowed to react for 5 minutes. Then, feeding of Emulsion A into the reaction vessel was started and the emulsion was fed into the reaction vessel within 120 minutes while maintaining the temperature of 95°C. In parallel, starting at the same time as the feed of Emulsion A but from a spatially separated feeding vessel, Initiator Solution I was fed into the reaction vessel within 120 minutes. After the end of the addition of Emulsion A and Initiator Solution I, the emulsion vessel was rinsed with 11.75 g of deionized water and the reaction vessel stirred for an additional 15 minutes. Afterwards, 2.68 g of 25 wt.-% aqueous ammonia were added within 10 minutes during which the reaction mixture was allowed to cool to 90°C.

After the addition of aqueous ammonia, starting at the same time but from two spatially separated feeding vessels, Oxidation Solution O and Reduction Solution R were fed into the reaction vessel at 90°C within 60 minutes. Thereafter, 2.43 g of 25 wt.-% aqueous ammonia were added and the vessel was allowed to cool to 25°C.

The pH value of the final dispersion was 8.6. The solids content of the final dispersion was 47.0%. The particle diameter as measured by DLS was 105 nm.

Preparation Example VD9 (not according to the invention)

The polymer dispersion VD9 was prepared according to protocol of preparation example D1 with the following amendments:

Emulsion A was prepared by mixing 111.61 g of emulsifier A, 25.00 g of emulsifier B, 21.25 g of acrylic acid, 660.25 g of styrene, 372.00 g of n-butyl acrylate, 196.50 g or 2-ethylhexyl acrylate and 454.40 g of deionized water.

The Initiator Solution I was prepared by dissolving 5.00 g of sodium peroxodisulfate in 64.43 g of deionized water.

30 minutes after the start of the Oxidation Solution O and Reduction Solution R addition 137.50 g of an aqueous sodium hydroxide solution (5 wt.-%) and 61.80 g of deionized water were added to the reaction vessel and the vessel was cooled to 25°C.

The pH value of the final dispersion was 7.7. The solids content of the final dispersion was 50.9%. The particle diameter as measured by DLS was 161 nm.

Preparation Example VD10 (not according to the invention)

The polymer dispersion VD10 was prepared according to the following protocol:

Emulsion A was prepared by mixing 40.46 g of emulsifier A, 6.80 g of acrylic acid, 5.67 g of a 50 wt.-% aqueous solution of AMPS, 238.04 g of styrene, 225.24 g of n-butyl acrylate, 89.05 g or 2-ethylhexyl acrylate, 4.53 g of vinyltriethoxylsilane and 224.43 g of deionized water.

The Initiator Solution I was prepared by dissolving 2.19 g of sodium peroxodisulfate in 29.15 g of deionized water.

Oxidation Solution O was prepared by dissolving 1.65 g of t-butyl hydroperoxide in 14.85 g of deionized water.

Reduction Solution R was prepared by dissolving 1.95 g of sodium bisulfite in 11.68 g of deionized water mixed with 0.72 g of acetone.

A reaction vessel, equipped with a stirrer and three separate feeding lines, was charged with 172.26 g of deionized water and 9.17 g of seed latex and pre-heated to 85°C. After reaching the reaction temperature of 85°C, feeding of Emulsion A into the reaction vessel was started and the emulsion was fed into the reaction vessel within 150 minutes while maintaining the temperature of 85°C. In parallel, starting at the same time as the feed of Emulsion A but from a spatially separated feeding vessel, Initiator Solution I was fed into the reaction vessel within 180 minutes. After the end of the addition of Emulsion A and Initiator Solution I, the emulsion vessel was rinsed with 9.41 g of deionized water and the reaction vessel stirred for an additional 30 minutes.

Thereafter, starting at the same time but from two spatially separated feeding vessels, Oxidation Solution O and Reduction Solution R were fed into the reaction vessel at 95°C within 120 minutes. Upon completion, 30.80 g 10 wt.-% aqueous NaOH were added and the vessel was allowed to cool to 25°C.

The pH value of the final dispersion was 8.4. The solids content of the final dispersion was 51.1%. The particle diameter as measured by DLS was 158 nm.

Preparation Example VD11 (not according to the invention)

The polymer dispersion VD11 was prepared according to protocol of preparation example D1 with the following

amendments:
Emulsion A was prepared by mixing 111.61 g of emulsifier A, 25.00 g of emulsifier B, 21.25 g of acrylic acid, 532.75 g of styrene, 497.00 g of n-butyl acrylate, 196.50 g of 2-ethylhexyl acrylate, 2.50 g of MEMO and 425.40 g of deionized water.

The Initiator Solution I was prepared by dissolving 5.00 g of sodium peroxodisulfate in 64.43 g of deionized water.

30 minutes after the start of the Oxidation Solution O and Reduction Solution R addition 137.50 g of an aqueous sodium hydroxide solution (5 wt.-%) and 56.81 g of deionized water were added to the reaction vessel and the vessel was cooled to 25°C.

The pH value of the final dispersion was 7.1. The solids content of the final dispersion was 50.4%. The particle diameter as measured by DLS was 168 nm.

Preparation Example VD12 (not according to the invention)

The polymer dispersion VD12 was prepared according to protocol of preparation example D13 with the following amendments:

Emulsion A was prepared by mixing 51.00 g of emulsifier A, 11.50 g of emulsifier B, 11.50 g of methacrylic acid, 218.00 g of methyl methacrylate, 180.00 g of n-butyl acrylate, 90.00 g of 2-ethylhexyl acrylate, 73.50 of styrene and 190.00 g of deionized water.

Emulsion B was prepared by mixing 51.00 g of emulsifier A, 11.50 g of emulsifier B, 11.50 g of methacrylic acid, 218.00 g of methyl methacrylate, 180.00 g of n-butyl acrylate, 90.00 g of 2-ethylhexyl acrylate, 73.50 of styrene, 34.50 g of an aqueous sodium hydroxide solution (5 wt.-%), and 190.38 g of deionized water.

30 minutes after the start of the Oxidation Solution O and Reduction Solution R addition 50.60 g of an aqueous sodium hydroxide solution (5 wt.-%) and 56.81 g of deionized water were added to the reaction vessel and the vessel was cooled to 25°C.

The pH value of the final dispersion was 7.0. The solids content of the final dispersion was 50.9%. The particle diameter as measured by DLS was 155 nm.

The monomer composition of the respective polymers and the degree of neutralization of monomers M2 are summarized in the following table 1:

Table 1

| | Monomers M1 [pphm] | | | | Monomers M2 [pphm] | | Monomers M3 [pphm] | Monomers M4 [pphm] | DN1) |
|---|---|---|---|---|---|---|---|---|---|
| Ex# | MMA | S | BA | EHA | MAA | AA | AMPS | AM | mol% |
| D1 | 38.0 | 12.8 | 31.5 | 15.7 | 2.0 | 0 | 0 | 0 | 50 |
| D2 | 38.0 | 12.8 | 31.0 | 15.7 | 0 | 2.5 | 0 | 0 | 70 |
| D3 | 38.0 | 12.8 | 31.8 | 15.7 | 0 | 1.7 | 0 | 0 | 50 |
| D4 | 48.1 | 0 | 50.2 | 0 | 0 | 1.7 | 0 | 0 | 50 |
| D5 | 47.6 | 0 | 50.4 | 0 | 2.0 | 0 | 0 | 0 | 50 |
| D6 | 50.8 | 0 | 31.5 | 15.7 | 2.0 | 0 | 0 | 0 | 50 |
| D7 | 50.8 | 0 | 33.0 | 15.7 | 0 | 0.5 | 0 | 0 | 220 |
| D8 | 50.8 | 0 | 31.8 | 15.7 | 0 | 1.7 | 0 | 0 | 50 |
| D9 | 49.3 | 0 | 50.2 | 0 | 0.5 | 0 | 0 | 0 | 250 |
| D10 | 38.0 | 12.8 | 33.0 | 15.7 | 0 | 0.5 | 0 | 0 | 210 |
| D11 | 38.0 | 12.8 | 31.5 | 15.7 | 2.0 | 0 | 0 | 0 | 70 |
| D12 | 38.0 | 12.8 | 33.0 | 15.7 | 0.5 | 0 | 0 | 0 | 120 |
| D13 | 38.0 | 12.8 | 31.5 | 15.7 | 2.0 | 0 | 0 | 0 | 50[4)] |
| D14 | 38.0 | 12.8 | 31.5 | 15.7 | 2.0 | 0 | 0 | 0 | 25[4)] |
| D15 | 38.0 | 12.8 | 31.5 | 15.7 | 2.0 | 0 | 0 | 0 | 35 |
| D16 | 38.0 | 12.8 | 31.8 | 15.7 | 0 | 1.7 | 0 | 0 | 35 |

(continued)

| | Monomers M1 [pphm] | | | | Monomers M2 [pphm] | | Monomers M3 [pphm] | Monomers M4 [pphm] | DN[1)] |
|---|---|---|---|---|---|---|---|---|---|
| Ex# | MMA | S | BA | EHA | MAA | AA | AMPS | AM | mol% |
| VD1 | 38.0 | 12.8 | 31.5 | 15.7 | 2.0 | 0 | 0 | 0 | 0 |
| VD2 | 38.0 | 12.8 | 31.0 | 15.7 | 0 | 2.5 | 0 | 0 | 0 |
| VD3 | 38.0 | 12.8 | 31.8 | 15.7 | 0 | 1.7 | 0 | 0 | 0 |
| VD4 | 48.1 | 0 | 50.2 | 0 | 0 | 1.7 | 0 | 0 | 0 |
| VD5 | 47.6 | 0 | 50.4 | 0 | 2.0 | 0 | 0 | 0 | 0 |
| VD6 | 50.8 | 0 | 31.5 | 15.7 | 2.0 | 0 | 0 | 0 | 0 |
| VD7 | 34.6 | 12.8 | 50.4 | 0 | 0 | 1.0 | 0 | 1.2 | 0 |
| VD8 | 48.6 | 0 | 0 | 48.6 | 0 | 1.3 | 0 | 1.5 | 0 |
| VD9 | 0 | 52.0 | 29.0 | 15.7 | 0 | 1.7 | 0 | 0 | 0 |
| VD10[2)] | 0 | 42.0 | 39.8 | 15.7 | 0 | 1.2 | 0.5 | 0 | 0 |
| VD11 [3)] | 0 | 42.8 | 39.8 | 15.7 | 0 | 1.5 | 0 | 0 | 0 |
| VD12 | 38.0 | 12.8 | 31.5 | 15.7 | 2.0 | 0 | 0 | 0 | 12.5[4)] |

1) DN: Degree of neutralization of monomers M2
2) example also contains 0.8 pphm of vinyltriethoxysilane
3) example also contains 0.2 pphm of 3-methacryloxypropyltrimethoxysilane
4) multistage process, average DN in relation to all monomers M2

## E Stability of polymer dispersions under alkaline conditions

For stability assessment, 95 parts by weight of the respective aqueous polymer dispersion of the preparation examples was mixed with 5 parts by weight of a commercial kali water glass having an $SiO_2$ content according to ISO 2124 of about 21 wt.-% and a $K_2O$ content of about 8 wt.-%. Then, the pH was adjusted by addition of 20 wt.-% aqueous potassium hydroxide to a target value in the range of 11.0 to 11.5. The pH of the mixture was re-measured after 1 day at 20°C as described in section C-ii. The result is given in the following table 2. The viscosity of the mixture was also determined as described in section C-vi. The results are summarized in table 2. Then, the mixture was stored for 4 weeks at 50°C. Thereafter, both pH and viscosity were re-measured. The results are given in table 2.

Table 2: Results of stability tests

| Ex# | Viscosity 24 h/22°C [1)] [m Pas] | Viscosity after storage [2)] [m Pas] | Viscosity ratio [3)] | pH 24h 22°C [1)] | pH after storage [2)] | dpH [4)] |
|---|---|---|---|---|---|---|
| D1 | 38 | 60 | 1.6 | 11.3 | 11.0 | -0.3 |
| D2 | 2096 | 2295 | 1.1 | 11.3 | 11.3 | <0.1 |
| D3 | 29 | 364 | 12.6 | 11.2 | 11.0 | -0.2 |
| D4 | 212 | 354 | 1.7 | 11.2 | 11.3 | 0.1 |
| D5 | 98 | 633 | 6.5 | 11.1 | 11.2 | 0.1 |
| D6 | 201 | 946 | 4.7 | 11.1 | 11.2 | 0.1 |
| D7 | 108 | 271 | 2.5 | 11.2 | 11.3 | 0.1 |
| D8 | 172 | 478 | 2.8 | 11.1 | 11.3 | 0.2 |
| D9 | 58 | 62,7 | 1.1 | 11.2 | 11.3 | 0.1 |
| D10 | 75 | 169 | 2.3 | 11.3 | 11.1 | -0.2 |
| D11 | 171 | 150.2 | 0.9 | 11.2 | 11.2 | <0.1 |
| D12 | 119 | 234 | 2.0 | 11.2 | 11.4 | 0.2 |

(continued)

| Ex# | Viscosity 24 h/22°C 1) [m Pas] | Viscosity after storage 2) [m Pas] | Viscosity ratio 3) | pH 24h 22°C 1) | pH after storage 2) | dpH 4) |
|---|---|---|---|---|---|---|
| D13 | 68 | 821 | 12.1 | 11.3 | 11.3 | <0.1 |
| D14 | 107 | 854 | 8.0 | 11.2 | 11.3 | 0.1 |
| D15 | 30 | 231.8 | 7.7 | 11.0 | 11.2 | 0.2 |
| D16 | 63 | 144.8 | 2.3 | 11.1 | 11.3 | 0.2 |
| VD1 | 67 | coagulated | NA | 11.2 | NA | NA |
| VD2 | 1792 | 46536 | 26 | 11.1 | 11.1 | <0.1 |
| VD3 | 45 | 1259 | 28 | 11.7 | 11.0 | -0.7 |
| VD4 | coagulated | NA | NA | NA | NA | NA |
| VD5 | coagulated | NA | NA | NA | NA | NA |
| VD6 | coagulated | NA | NA | NA | NA | NA |
| VD7 | 1357 | 42206 | 31 | 11.1 | 10.3 | -0.8 |
| VD8 | 957 | 175920 | 184 | 11.2 | 10.3 | -0.9 |
| VD9 | 34 | 667 | 20 | 11.1 | 11.0 | -0.1 |
| VD10 | 496 | 1097 | 2 | 11.2 | 11.4 | 0.2 |
| VD11 | 68 | 813 | 12 | 11.2 | 11.2 | <0.1 |
| VD12 | 44 | 2020 | 45,9 | 11.1 | 11.1 | <0.1 |

1) Measured after 24 h at 22°C
2) Measured after 4 weeks at 50°C
3) Ratio of viscosities before and after storage at 50°C
4) Difference between pH values before and after storage at 50°C

## F Formulation of a waterborne paint

The respective polymer dispersion of the preparation examples described in section D was formulated as a paint according to the recipe as described in the following table 3.

Table 3: Recipe of the paint formulation

| **Function** | **Amount / g** | **Chemistry** | **Brand** |
|---|---|---|---|
| Solvent | 200 | Water | |
| Thickener | 3 | Powder of an anionic polysaccharide with delayed swelling, 85% of active matter | Betolin® V 30 |
| Dispersant | 2 | 40% by weight aqueous solution of modified phosphonic acids | Sapetin® D 20 |
| Stabilizer | 3 | Low viscosity, aqueous solution of hydrophilic alkoxylated alkylammonium compound | Betolin® Q 40 |
| Coalescent | 15 | Isoparafinnic synthetic hydrocarbon solvent | Shellsol® T |
| Defoamer | 1 | Mineral oil emulsion stabilized with non-ionic surfactants | Foamaster® MO 2114 |
| Pigment | 100 | Titanium dioxide | Kronos® 2190 |
| Filler | 100 | Calcium carbonate | Omyacarb® 5 GU |
| Filler | 40 | Talc | Plustalc® H 10 |
| Filler | 70 | Leucophyllite (mica, chlorite and quartz) | Plastorit® 0 |
| Filler | 100 | Leucophyllite (mica, chlorite and quartz) | Plastorit® 0000 |

(continued)

| Function | Amount / g | Chemistry | Brand |
|---|---|---|---|
| Dispersion | 100 | See examples<br>Adjusted to 50 wt.-% solids | -- |
| Water glass | 250 | Kali water glass with 4.11 molar ratio of $SiO_2/K_2O$, 29 wt.-% solids | Trasol® KW-N |
| Stabilizer | 10 | Silanoles and "complex stabilizers" for water glass 50 wt.-% solids | Betolin® A 11 |
| Defoamer | 2 | Mineral oil emulsion stabilized with non-ionic surfactants | Foamaster® MO 2114 |
| Solvent | 4 | Water | |
| | 1000 | | |

Water and Betolin® V 30 were mixed for 5 minutes using a disperser at 930 rpm. Then the other liquid components and the pigment are added at the same stirring speed (Sapetin® D 20, Betolin® Q 40, Shellsol® T, Foamaster® MO 2114, Kronos® 2190). Fillers were then added at a stirring speed of 1400 rpm, followed by 10 min dispersing at the same speed. The remaining components listed in the table were added under stirring at 1400 rpm, whereas the water glass is added slowly to avoid coagulation.

The properties of the paint were assessed by determining the KU viscosity and by pH measurements after 1 day at room temperature and again after one and two weeks at 50°C each. If the silicate paint was not measurable due to coagulation, "coagulated" denotes the worst rating. For measurable (i.e. not coagulated) samples the KU viscosity was measured at 20°C using a Brookfield viscosimeter (KU-2) equipped with a paddle spindle at 200 rpm spindle speed. The result are reported in Krebs Units and summarized in Table 4:

| Polymer dispersion | Silicate paint KU After 1d RT | Silicate paint KU after 7d/50°C | Silicate paint KU after 14d/50°C | pH 1d RT | pH 14d/50°C |
|---|---|---|---|---|---|
| VD1 | coagulated | NA | NA | NA | NA |
| VD4 | coagulated | NA | NA | NA | NA |
| VD5 | coagulated | NA | NA | NA | NA |
| VD6 | coagulated | NA | NA | NA | NA |
| VD8 | coagulated | NA | NA | NA | NA |
| VD11 | 90 | coagulated | NA | 11.2 | NA |
| D1 | 87 | 126 | 125 | 11.3 | 11.2 |
| D4 | 87 | 132 | 132 | 11.0 | 11.1 |
| D7 | 123 | >144 | Coagulated | 11.2 | 11.2 |
| D8 | 88 | 140 | >144 | 11.1 | 11.1 |
| D10 | 88 | 129 | 126 | 11.3 | 11.2 |

## G Formulation of a waterborne plaster

The respective polymer dispersion of the preparation examples described in section D was formulated as a plaster according to the recipe as described in the following table 5.

Table 5: Recipe of the plaster formulation

| Function | Amount / g | Chemistry | Brand |
|---|---|---|---|
| Solvent | 4 | Water | --- |
| Thickener | 33 | Xanthan gum, freshly prepared 3 wt.-% solution in water | Rhodopol® 50 MD |

(continued)

| | | | |
|---|---|---|---|
| Dispersant | 2 | 40 wt.-% aqueous solution of modified phosphonic acids | Sapetin® D20 |
| Thickener | 16 | Cellulose ether polymer, freshly prepared 4 wt.-% solution in water r | Walocel® CRT 10000 P |
| Hydrophobizing agent | 8 | 63 wt.-% aqueous dispersion of a paraffine waxr | Loxanol® M I 6840 |
| Binder | 70 | See examples | Polymer dispersion (50%) |
| **Function** | **Amount / g** | **Chemistry** | **Brand** |
| Defoamer | 2 | Mineral oil emulsion stabilized with non-ionic surfactants | Foamaster® MO 2134 |
| Coalescent | 15 | Mixture of aliphatic hydrocarbons with high chain length | White spirit 187-213°C |
| Coalescent | 3 | Aqueous emulsion of fatty alcohols | Loxanol® OT 5853 |
| Pigment | 35 | Titanium dioxide | Kronos® 2044 |
| Water glass | 150 | Kali water glass with 4.11 molar ratio of $SiO_2/K_2O$, 30 wt.-% solids 1.4% of organic stabilizing additives (quarternary amines) | Betolin® P 35 |
| Structural filler | 2 | $SiO_2$ fibers (4.5 mm) | Glass fiber wet (4,5 mm) |
| Filler | 280 | Calcium carbonate | Omyacarb® 40 GU |
| Filler | 50 | Leucophyllite (mica, chlorite and quartz) | Plastorit® 1 |
| Filler | 70 | Calcium carbonate (ground marble) | Calcilit® 1,0-1.5 KA |
| Filler | 260 | Calcium carbonate (ground marble) | Calcilit® 1,8-2,5 KA |
| - | 1000 | | |

Aqueous Thickener solutions of Xanthan (Rhodopol® 50 M D) and cellulose ether (Walocel® CRT 10000 P) were freshly prepared. Then, water, Rhodopol® 50 MD solution, Sapetin® D20, Walocel® CRT 10000 P solution and Loxanol® MI 6840 were mixed in the precharge. Then, the other ingredients were added in the order given in table 5 with stirring at 930 rpm until addition of Kronos® 2044 addition, thereafter with stirring 1400 rpm, while water glass was added slowly to avoid coagulation. Then, the performance and stability of the plaster formulations were visually assessed according to the following protocol:
Assessment was carried while stirring the render with a spatula after 1 day at room temperature and again after two weeks at 50°C. Storage stability of the waterborne plaster formulations was assessed on a scale of 0 to 5 as described below. The results are summarized in Table 6:

0: Perfect, homogenous and flowing, no notable viscosity increase.
1: Good, homogeneous and flowing, slight viscosity increase
2: Acceptable, significant viscosity increase
3: Poor, almost not flowing any more
4: Very poor, solids-like behavior
5: Completely coagulated

Table 6

| Polymer dispersion | Render performance After 1d RT | Render performance after 14d/50°C |
|---|---|---|
| VD1 | 4 | 5 |
| VD11 | 1 | 4 |
| D1 | 1 | 1 |

(continued)

| Polymer dispersion | Render performance After 1d RT | Render performance after 14d/50°C |
|---|---|---|
| D10 | 1 | 1 |

## Claims

1. The use of an aqueous polymer dispersion of a polymer P obtainable by emulsion polymerization of ethylenically unsaturated monomers M in the presence of at least one anionic emulsifier, where the monomers M comprise

   a) 90 to 99.9% by weight, based on the total weight of monomers M, of one or more monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
   b) 0.1 to 5% by weight, based on the total weight of monomers M, of one or more monomers M2 selected from monoethylenically unsaturated monomers bearing at least one carboxyl group;
   and optionally one or both of monomers M3 and M4
   c) 0 to 2% by weight, based on the total weight of monomers M, of one or more monoethylenically unsaturated monomers M3 bearing at least one sulfate or sulfonate group; and
   d) 0 to 5% by weight, based on the total weight of monomers M, of one or more ethylenically unsaturated non-ionic monomers M4 different from the monomers M1, M2 and M3;
   whereby the emulsion polymerization is carried out in the presence of a base in such an amount sufficient to neutralize more than 20 mol-%, in particular at least 25 mol-% and especially at least 30 mol-% of the carboxyl groups of all monomers M2;
   as a binder in a waterborne coating formulation having a pH of at least pH 10, as determined at 20° C and 1 bar.

2. A method for producing a waterborne coating formulation comprising

   (i) providing an aqueous polymer dispersion of a polymer P by emulsion polymerization of ethylenically unsaturated monomers M in the presence of at least one anionic emulsifier, where the monomers M comprise

      a) 90 to 99.9% by weight, based on the total weight of monomers M, of one or more monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
      b) 0.1 to 5% by weight, based on the total weight of monomers M, of one or more monomers M2 selected from monoethylenically unsaturated monomers bearing at least one carboxyl group;
      and optionally one or both of monomers M3 and M4
      c) 0 to 2% by weight, based on the total weight of monomers M, of one or more monoethylenically unsaturated monomers M3 bearing at least one sulfate or sulfonate group; and
      d) 0 to 5% by weight, based on the total weight of monomers M, of one or more ethylenically unsaturated non-ionic monomers M4 different from the monomers M1, M2 and M3;

   whereby the emulsion polymerization is carried out in the presence of a base in such an amount sufficient to neutralize more than 20 mol-%, in particular at least 25 mol-% and especially at least 30 mol-% of the carboxyl groups of all monomers M2;
   (ii) incorporating the aqueous polymer dispersion of a polymer P obtained in step (i) as a binder into a waterborne coating formulation and
   (iii) adjusting the pH value of the waterborne coating formulation to a pH of at least pH 10, as determined at 20° C and 1 bar.

3. The use of claim 1 or method of claim 2, wherein the pH value of the polymer dispersion at the end of the emulsion polymerisation is at least pH 5.5, e. g. pH 5.5 to pH 9.0, as determined at 20° C and 1 bar.

4. The use or method of any one of the preceding claims, wherein the amount of monomers M2 is such that the total amount of carboxyl groups in the polymer is in the range of 0.05 to 0.5 mol/kg of the polymer P.

5. The use or method of any one of the preceding claims, where the emulsion polymerization is carried out by a feeding process, wherein at least 90% by weight of the monomers M are fed to the emulsion polymerization and where an amount of the base is present in the emulsion polymerization before 80 mol-% of the monomers M2 have been fed to emulsion polymerization, where the amount is sufficient to neutralize at least 24 mol-% of the carboxyl groups of all monomers M2.

6. The use or method of any one of the preceding claims, wherein the monomer M1 comprises at least 90% by weight, based on the total weight of monomers M, of a combination of at least one monomer M1a selected from styrene, $C_1$-$C_4$-alkyl esters of methacrylic acid, $C_5$-$C_{10}$ cycloalkyl esters of methacrylic acid and combinations thereof and at least one $C_2$-$C_{12}$-alkyl ester of acrylic acid as a monomer M1b.

7. The use or method of any one of the preceding claims, wherein the monomers M comprise less than 0.1% by weight, based on the total weight of monomers M, of ethylenically unsaturated monomers bearing one or more phosphate and/or phosphonate groups.

8. The use or method of any one of the preceding claims, wherein the anionic emulsifier is selected from emulsifiers bearing a sulfonate or sulfate group, and wherein the anionic emulsifier is in particular selected from alkylether sulfates and alkyl sulfates and combinations thereof..

9. The use or method of any one of the preceding claims, wherein the amount of polymer P in the coating formulation is in the range of 4 to 55 % by weight, based on the total amount of solids in the coating formulation.

10. The use or method of any one of the preceding claims, wherein the polymer P has a glass transition temperature Tg in the range of -5 to +35° C and wherein the aqueous polymer dispersion has a minimum film forming temperature of not more than 30° C, in particular not more than 20° C.

11. The use or method of any one of the preceding claims, wherein the waterborne coating formulation contains an alkalimetal hydroxide and/or a buffer for adjusting the pH value of the formulation to at least pH10, as determined at 20° C and 1 bar.

12. The use or method of claim 11, wherein the buffer is selected from watersoluble alkali silicates, alkali methyl siliconates, alkanolamines, alkoxylated polyamines, polylysine, calcium silicate hydrates, calcium aluminiate sulfate hydrates, lithium carbonate and combinations of alkalimetal hydroxides with aluminium silicate hydrates.

13. A coating formulation which is obtainable by a method of any one of claims 2 to 12 and which has a pH of at least pH 10, as determined at 20° C and 1 bar.

14. An aqueous polymer dispersion of a polymer P, which is obtainable by emulsion polymerization of ethylenically unsaturated monomers M in the presence of at least one anionic emulsifier, where the monomers M consist of

a) 95 to 99.9% by weight, based on the total weight of monomers M, of one or more monomers M1 selected from the group consisting of $C_1$-$C_{20}$ alkylesters of acrylic acid, $C_1$-$C_{20}$ alkylesters of methacrylic acid, $C_5$-$C_{20}$ cycloalkylesters of acrylic acid, $C_5$-$C_{20}$ cycloalkylesters of methacrylic acid, and monovinylaromatic monomers, where the relative amount of monovinylaromatic monomers does not exceed 15% by weight, based on the total weight of monomers M;
b) 0.1 to 5% by weight, based on the total weight of monomers M, of one or more monomers M2 selected from monoethylenically unsaturated monomers bearing at least one carboxyl group;
and optionally one or both of monomers M3 and M4
c) 0 to 2% by weight, based on the total weight of monomers M, of one or more monoethylenically unsaturated monomers M3 bearing at least one sulfate or sulfonate group; and
d) 0 to 0.4% by weight, based on the total weight of monomers M, of one or more ethylenically unsaturated non-ionic monomers M4 different from the monomers M1, M2 and M3;
whereby the emulsion polymerization is carried out in the presence of a base in such an amount sufficient to neutralize more than 20 mol-%, in particular at least 25 mol-% and especially at least 30 mol-% of the carboxyl groups of all monomers M2;

wherein the monomers M comprise less than 0.1% by weight, based on the total weight of monomers M, of ethylenically unsaturated monomers bearing one or more phosphate groups and where the polymer dispersion contains no or not more than 0.2%, based on the polymerized monomers M of a protective colloid.

**15.** A process for producing an aqueous polymer dispersion of a polymer P of claim 14 comprising an emulsion polymerization of the ethylenically unsaturated monomers M as defined in claim 14 in the presence of at least one anionic emulsifier and in the absence or in the presence of not more than 0.2%, based on the monomers M, of a protective colloid, whereby the emulsion polymerization is carried out in the presence of a base in such an amount sufficient to neutralize more than 20 mol-%, in particular more than 25 mol-% and especially at least 30 mol-% of the carboxyl groups of all monomers M2.

**Patentansprüche**

**1.** Verwendung einer wässrigen Polymerdispersion eines Polymers P, erhältlich durch Emulsionspolymerisation von ethylenisch ungesättigten Monomeren M in Gegenwart wenigstens eines anionischen Emulgators, wobei die Monomere M umfassen

a) 90 bis 99,9 Gew.-%, bezogen auf das Gesamtgewicht der Monomere M, an einem oder mehreren Monomeren M1 ausgewählt aus der Gruppe bestehend aus $C_1$-$C_{20}$-Alkylestern von Acrylsäure, $C_1$-$C_{20}$-Alkylestern von Methacrylsäure, $C_5$-$C_{20}$-Cycloalkylestern von Acrylsäure, $C_5$-$C_{20}$-Cycloalkylestern von Methacrylsäure und monovinylaromatischen Monomeren, wobei die relative Menge von monovinylaromatischen Monomeren 15 Gew.-% bezogen auf das Gesamtgewicht der Monomere M nicht übersteigt;
b) 0,1 bis 5 Gew.-%, bezogen auf das Gesamtgewicht der Monomere M, an einem oder mehreren Monomeren M2 ausgewählt aus monoethylenisch ungesättigten Monomeren, die wenigstens eine Carboxylgruppe tragen;
und gegebenenfalls eines oder beide von Monomeren M3 und M4;
c) 0 bis 2 Gew.-%, bezogen auf das Gesamtgewicht der Monomere M, an einem oder mehreren monoethylenisch ungesättigten Monomeren M3, die wenigstens eine Sulfat- oder Sulfonatgruppe tragen; und
d) 0 bis 5 Gew.-%, bezogen auf das Gesamtgewicht der Monomere M, an einem oder mehreren ethylenisch ungesättigten nichtionischen Monomeren M4, die von den Monomeren M1, M2 und M3 verschieden sind;

wobei die Emulsionspolymerisation in Gegenwart einer Base in einer Menge durchgeführt wird, die ausreicht, um mehr als 20 Mol-%, insbesondere wenigstens 25 Mol-% und insbesondere wenigstens 30 Mol-% der Carboxylgruppen aller Monomere M2 zu neutralisieren;
als Bindemittel in einer Beschichtungsformulierung auf Wasserbasis mit einem pH-Wert von wenigstens pH 10, wie bestimmt bei 20 °C und 1 bar.

**2.** Verfahren zur Herstellung einer Beschichtungsformulierung auf Wasserbasis, umfassend:

(i) Bereitstellen einer wässrigen Polymerdispersion eines Polymers P durch Emulsionspolymerisation von ethylenisch ungesättigten Monomeren M in Gegenwart wenigstens eines anionischen Emulgators, wobei die Monomere M umfassen

a) 90 bis 99,9 Gew.-%, bezogen auf das Gesamtgewicht der Monomere M, an einem oder mehreren Monomeren M1 ausgewählt aus der Gruppe bestehend aus $C_1$-$C_{20}$-Alkylestern von Acrylsäure, $C_1$-$C_{20}$-Alkylestern von Methacrylsäure, $C_5$-$C_{20}$-Cycloalkylestern von Acrylsäure, $C_5$-$C_{20}$-Cycloalkylestern von Methacrylsäure und monovinylaromatischen Monomeren, wobei die relative Menge von monovinylaromatischen Monomeren 15 Gew.-% bezogen auf das Gesamtgewicht der Monomere M nicht übersteigt;
b) 0,1 bis 5 Gew.-%, bezogen auf das Gesamtgewicht der Monomere M, an einem oder mehreren Monomeren M2 ausgewählt aus monoethylenisch ungesättigten Monomeren, die wenigstens eine Carboxylgruppe tragen;
und gegebenenfalls eines oder beide von Monomeren M3 und M4;
c) 0 bis 2 Gew.-%, bezogen auf das Gesamtgewicht der Monomere M, an einem oder mehreren monoethylenisch ungesättigten Monomeren M3, die wenigstens eine Sulfat- oder Sulfonatgruppe tragen; und
d) 0 bis 5 Gew.-%, bezogen auf das Gesamtgewicht der Monomere M, an einem oder mehreren ethylenisch ungesättigten nichtionischen Monomeren M4, die von den Monomeren M1, M2 und M3 verschieden sind;

wobei die Emulsionspolymerisation in Gegenwart einer Base in einer Menge durchgeführt wird, die ausreicht, um

mehr als 20 Mol-%, insbesondere wenigstens 25 Mol-% und insbesondere wenigstens 30 Mol-% der Carboxylgruppen aller Monomere M2 zu neutralisieren;
(ii) Einverleiben der wässrigen Polymerdispersion eines bei Schritt (i) erhaltenen Polymers P als Bindemittel in eine Beschichtungsformulierung auf Wasserbasis und
(iii) Einstellen des pH-Wertes der Beschichtungsformulierung auf Wasserbasis auf einen pH-Wert von wenigstens pH 10, wie bestimmt bei 20 °C und 1 bar.

**3.** Verwendung nach Anspruch 1 oder Verfahren nach Anspruch 2, wobei der pH-Wert der Polymerdispersion am Ende der Emulsionspolymerisation wenigstens pH 5,5 beträgt, z.B. pH 5,5 bis pH 9,0, wie bestimmt bei 20 °C und 1 bar.

**4.** Verwendung oder Verfahren nach einem der vorstehenden Ansprüche, wobei die Menge an Monomeren M2 so ist, dass die Gesamtmenge an Carboxylgruppen in dem Polymer in dem Bereich von 0,05 bis 0,5 mol/kg des Polymers P liegt.

**5.** Verwendung oder Verfahren nach einem der vorstehenden Ansprüche, wobei die Emulsionspolymerisation durch ein Beschickungsverfahren durchgeführt wird, wobei wenigstens 90 Gew.-% der Monomere M der Emulsionspolymerisation zugeführt werden und wobei eine Menge der Base in der Emulsionspolymerisation vorliegt, bevor 80 Mol-% der Monomere M2 der Emulsionspolymerisation zugeführt worden sind, wobei die Menge ausreicht, wenigstens 24 mol-% der Carboxylgruppen aller Monomere M2 zu neutralisieren.

**6.** Verwendung oder Verfahren nach einem der vorstehenden Ansprüche, wobei das Monomer M1 wenigstens 90 Gew.-%, bezogen auf das Gesamtgewicht der Monomere M, an einer Kombination aus wenigstens einem Monomer M1a ausgewählt aus Styrol, $C_1$-$C_4$-Alkylestern von Methacrylsäure, $C_5$-$C_{10}$-Cycloalkylestern von Methacrylsäure und Kombinationen davon und wenigstens einem $C_2$-$C_{12}$-Alkylester der Acrylsäure als Monomer M1b umfasst.

**7.** Verwendung oder Verfahren nach einem der vorstehenden Ansprüche, wobei die Monomere M weniger als 0,1 Gew.-%, bezogen auf das Gesamtgewicht der Monomere M, an ethylenisch ungesättigten Monomeren umfassen, die eine oder mehrere Phosphat- und/oder Phosphonatgruppen tragen.

**8.** Verwendung oder Verfahren nach einem der vorstehenden Ansprüche, wobei der anionische Emulgator ausgewählt ist aus Emulgatoren, die eine Sulfonat- oder Sulfatgruppe tragen, und wobei der anionische Emulgator insbesondere ausgewählt ist aus Alkylethersulfaten und Alkylsulfaten und Kombinationen davon.

**9.** Verwendung oder Verfahren nach einem der vorstehenden Ansprüche, wobei die Menge an Polymer P in der Beschichtungsformulierung in dem Bereich von 4 bis 55 Gew.-%, bezogen auf das Gesamtgewicht an Feststoffen in der Beschichtungsformulierung, liegt.

**10.** Verwendung oder Verfahren nach einem der vorstehenden Ansprüche, wobei das Polymer P eine Glasübergangstemperatur Tg in dem Bereich von -5 bis +35 °C aufweist und wobei die wässrige Polymerdispersion eine Mindest-Filmbildungstemperatur von nicht mehr als 30 °C, insbesondere nicht mehr als 20 °C, aufweist.

**11.** Verwendung oder Verfahren nach einem der vorstehenden Ansprüche, wobei die Beschichtungsformulierung auf Wasserbasis ein Alkalimetallhydroxid und/oder einen Puffer zum Einstellen des pH-Werts der Formulierung auf wenigstens pH10, wie bestimmt bei 20 °C und 1 bar, enthält.

**12.** Verwendung oder Verfahren nach Anspruch 11, wobei der Puffer ausgewählt ist aus wasserlöslichen Alkalisilicaten, Alkalimethylsiliconaten, Alkanolaminen, alkoxylierten Polyaminen, Polylysin, Calciumsilicathydraten, Calciumaluminiatsulfathydraten, Lithiumcarbonat und Kombinationen von Alkalimetallhydroxiden mit Aluminiumsilicathydraten.

**13.** Beschichtungsformulierung, die durch ein Verfahren nach einem der Ansprüche 2 bis 12 erhältlich ist und einen pH-Wert von wenigstens pH 10, wie bestimmt bei 20 °C und 1 bar, aufweist.

**14.** Wässrige Polymerdispersion eines Polymers P, die durch Emulsionspolymerisation von ethylenisch ungesättigten Monomeren M in Gegenwart wenigstens eines anionischen Emulgators erhältlich ist, wobei die Monomere M bestehen aus

a) 95 bis 99,9 Gew.-%, bezogen auf das Gesamtgewicht der Monomere M, an einem oder mehreren Monomeren M1 ausgewählt aus der Gruppe bestehend aus $C_1$-$C_{20}$-Alkylestern von Acrylsäure, $C_1$-$C_{20}$-Alkylestern von

Methacrylsäure, $C_5$-$C_{20}$-Cycloalkylestern von Acrylsäure, $C_5$-$C_{20}$-Cycloalkylestern von Methacrylsäure und monovinylaromatischen Monomeren, wobei die relative Menge von monovinylaromatischen Monomeren 15 Gew.-% bezogen auf das Gesamtgewicht der Monomere M nicht übersteigt;
b) 0,1 bis 5 Gew.-%, bezogen auf das Gesamtgewicht der Monomere M, an einem oder mehreren Monomeren M2 ausgewählt aus monoethylenisch ungesättigten Monomeren, die wenigstens eine Carboxylgruppe tragen;
und gegebenenfalls eines oder beide von Monomeren M3 und M4;
c) 0 bis 2 Gew.-%, bezogen auf das Gesamtgewicht der Monomere M, an einem oder mehreren monoethylenisch ungesättigten Monomeren M3, die wenigstens eine Sulfat- oder Sulfonatgruppe tragen; und
d) 0 bis 0,4 Gew.-%, bezogen auf das Gesamtgewicht der Monomere M, an einem oder mehreren ethylenisch ungesättigten nichtionischen Monomeren M4, die von den Monomeren M1, M2 und M3 verschieden sind;

wobei die Emulsionspolymerisation in Gegenwart einer Base in einer Menge durchgeführt wird, die ausreicht, um mehr als 20 Mol-%, insbesondere wenigstens 25 Mol-% und insbesondere wenigstens 30 Mol-% der Carboxylgruppen aller Monomere M2 zu neutralisieren;
wobei die Monomere M weniger als 0,1 Gew.-%, bezogen auf das Gesamtgewicht der Monomere M, an ethylenisch ungesättigten Monomeren, die eine oder mehrere Phosphatgruppen tragen, umfassen und wobei die Polymerdispersion kein oder nicht mehr als 0,2 %, bezogen auf die polymerisierten Monomere M, an einem Schutzkolloid enthält.

**15.** Verfahren zur Herstellung einer wässrigen Polymerdispersion eines Polymers P nach Anspruch 14, umfassend eine Emulsionspolymerisation der ethylenisch ungesättigten Monomere M nach Anspruch 14 in Gegenwart wenigstens eines anionischen Emulgators und ohne Vorhandensein oder in Gegenwart von nicht mehr als 0,2 %, bezogen auf die Monomere M, an einem Schutzkolloid, wobei die Emulsionspolymerisation in Gegenwart einer Base in einer solchen Menge durchgeführt wird, dass mehr als 20 mol-%, insbesondere mehr als 25 Mol-% und insbesondere wenigstens 30 mol-% der Carboxylgruppen aller Monomere M2 neutralisiert werden.

## Revendications

**1.** Utilisation d'une dispersion aqueuse de polymère d'un polymère P pouvant être obtenu par polymérisation en émulsion de monomères éthyléniquement insaturés M en présence d'au moins un émulsifiant anionique, où les monomères M comprennent

a) 90 à 99,9 % en poids, par rapport au poids total de monomères M, d'un ou plusieurs monomères M1 choisis dans le groupe constitué par les esters d'alkyle en $C_1$-$C_{20}$ d'acide acrylique, les esters d'alkyle en $C_1$-$C_{20}$ d'acide méthacrylique, les esters de cycloalkyle en $C_5$-$C_{20}$ d'acide acrylique, les esters de cycloalkyle en $C_5$-$C_{20}$ d'acide méthacrylique, et les monomères monovinylaromatiques, la quantité relative de monomères monovinylaromatiques ne dépassant pas 15 % en poids, par rapport au poids total de monomères M ;
b) 0,1 à 5 % en poids, par rapport au poids total de monomères M, d'un ou plusieurs monomères M2 choisis parmi des monomères monoéthyléniquement insaturés portant au moins un groupe carboxyle ;
et éventuellement l'un ou les deux des monomères M3 et M4
c) 0 à 2 % en poids, par rapport au poids total de monomères M, d'un ou plusieurs monomères monoéthyléniquement insaturés M3 portant au moins un groupe sulfate ou sulfonate ; et
d) 0 à 5 % en poids, par rapport au poids total de monomères M, d'un ou plusieurs monomères non ioniques éthyléniquement insaturés M4 différents des monomères M1, M2 et M3 ;

moyennant quoi la polymérisation en émulsion est effectuée en présence d'une base en une quantité telle suffisante pour neutraliser plus de 20 % en moles, en particulier au moins 25 % en moles et notamment au moins 30 % en moles des groupes carboxyle de tous les monomères M2 ;
en tant que liant dans une formulation de revêtement à base d'eau ayant un pH d'au moins pH 10, tel que déterminé à 20 °C et 1 bar.

**2.** Procédé pour la production d'une formulation de revêtement à base d'eau comprenant

(i) la fourniture d'une dispersion aqueuse de polymère d'un polymère P par polymérisation en émulsion de monomères éthyléniquement insaturés M en présence d'au moins un émulsifiant anionique, où les monomères M comprennent

a) 90 à 99,9 % en poids, par rapport au poids total de monomères M, d'un ou plusieurs monomères M1 choisis dans le groupe constitué par les esters d'alkyle en $C_1$-$C_{20}$ d'acide acrylique, les esters d'alkyle en $C_1$-$C_{20}$ d'acide méthacrylique, les esters de cycloalkyle en $C_5$-$C_{20}$ d'acide acrylique, les esters de cycloalkyle en $C_5$-$C_{20}$ d'acide méthacrylique, et les monomères monovinylaromatiques, la quantité relative de monomères monovinylaromatiques ne dépassant pas 15 % en poids par rapport au poids total de monomères M ;
b) 0,1 à 5 % en poids, par rapport au total de monomères M, d'un ou plusieurs monomères M2 choisis parmi des monomères monoéthyléniquement insaturés portant au moins un groupe carboxyle ;
et éventuellement l'un ou les deux des monomères M3 et M4
c) 0 à 2 % en poids, par rapport au poids total de monomères M, d'un ou plusieurs monomères monoéthyléniquement insaturés M3 portant au moins un groupe sulfate ou sulfonate ; et
d) 0 à 5 % en poids, par rapport au poids total de monomères M, d'un ou plusieurs monomères non ioniques éthyléniquement insaturés M4 différents des monomères M1, M2 et M3 ;

moyennant quoi la polymérisation en émulsion est effectuée en présence d'une base en une quantité telle suffisante pour neutraliser plus de 20 % en moles, en particulier au moins 25 % en moles et notamment au moins 30 % en moles des groupes carboxyle de tous les monomères M2 ;
(ii) l'incorporation de la dispersion aqueuse de polymère d'un polymère P obtenue dans l'étape (i) en tant que liant dans une formulation de revêtement à base d'eau et
(iii) l'ajustement de la valeur du pH de la formulation de revêtement à base d'eau jusqu'à un pH d'au moins 10, tel que déterminé à 20 °C et 1 bar.

**3.** Utilisation selon la revendication 1 ou procédé selon la revendication 2, la valeur du pH de la dispersion de polymère à la fin de la polymérisation en émulsion étant d'au moins pH 5,5, par exemple pH 5,5 à pH 9,0, tel que déterminé à 20 °C et 1 bar.

**4.** Utilisation ou procédé selon l'une quelconque des revendications précédentes, la quantité de monomères M2 étant telle que la quantité totale de groupes carboxyle dans le polymère est dans la plage de 0,05 à 0,5 mol/kg du polymère P.

**5.** Utilisation ou procédé selon l'une quelconque des revendications précédentes, la polymérisation en émulsion étant conduite par un procédé d'alimentation, au moins 90 % en poids des monomères M étant alimentés à la polymérisation en émulsion et où une quantité de la base est présente dans la polymérisation en émulsion avant que 80 % en moles des monomères M2 ont été alimentés à la polymérisation en émulsion, où la quantité est suffisante pour neutraliser au moins 24 % en moles des groupes carboxyle de tous les monomères M2.

**6.** Utilisation ou procédé selon l'une quelconque des revendications précédentes, le monomère M1 comprenant au moins 90 % en poids, par rapport au poids total de monomères M, d'une combinaison d'au moins un monomère M1a choisi parmi le styrène, les esters d'alkyle en $C_1$-$C_4$ d'acide méthacrylique, les esters de cycloalkyle en $C_5$-$C_{10}$ d'acide méthacrylique et les combinaisons correspondantes et au moins un ester d'alkyle en $C_2$-$C_{12}$ d'acide acrylique en tant que monomère M1b.

**7.** Utilisation ou procédé selon l'une quelconque des revendications précédentes, les monomères M comprenant moins de 0,1 % en poids, par rapport au poids total de monomères M, de monomères éthyléniquement insaturés portant un ou plusieurs groupe(s) phosphate et/ou phosphonate.

**8.** Utilisation ou procédé selon l'une quelconque des revendications précédentes, l'émulsifiant anionique étant choisi parmi les émulsifiants portant un groupe sulfonate ou sulfate, et l'émulsifiant anionique étant en particulier choisi parmi les sulfates d'éther d'alkyle et les sulfates d'alkyle et leurs combinaisons.

**9.** Utilisation ou procédé selon l'une quelconque des revendications précédentes, la quantité de polymère P dans la formulation de revêtement étant dans la plage de 4 à 55 % en poids, par rapport à la quantité totale de solides dans la formulation de revêtement.

**10.** Utilisation ou procédé selon l'une quelconque des revendications précédentes, le polymère P ayant une température de transition vitreuse Tg dans la plage de - 5 à +35 °C et la dispersion aqueuse de polymère ayant une température minimale de formation de film non supérieure à 30 °C, en particulier non supérieure à 20 °C.

**11.** Utilisation ou procédé selon l'une quelconque des revendications précédentes, la formulation de revêtement à base

d'eau contenant un hydroxyde de métal alcalin et/ou un tampon pour ajuster la valeur du pH de la formulation jusqu'à au moins pH 10, comme déterminé à 20 °C et 1 bar.

**12.** Utilisation ou procédé selon la revendication 11, le tampon étant choisi parmi des silicates d'alcali solubles dans l'eau, des méthylsiliconates d'alcali, des alcanolamines, des polyamines alcoxylées, une polylysine, des hydrates de silicate de calcium, des hydrates de sulfate d'aluminiate de calcium, le carbonate de lithium et des combinaisons d'hydroxydes de métaux alcalins avec des hydrates de silicate d'aluminium.

**13.** Formulation de revêtement qui peut être obtenue par un procédé selon l'une quelconque des revendications 2 à 12 et qui a un pH d'au moins pH 10, tel que déterminé à 20 °C et 1 bar.

**14.** Dispersion aqueuse de polymère d'un polymère P, qui peut être obtenue par polymérisation en émulsion de monomères éthyléniquement insaturés M en présence d'au moins un émulsifiant anionique, où les monomères M sont constitués de

a) 95 à 99,9 % en poids, par rapport au poids total de monomères M, d'un ou plusieurs monomères M1 choisis dans le groupe constitué par les esters d'alkyle en $C_1$-$C_{20}$ d'acide acrylique, les esters d'alkyle en $C_1$-$C_{20}$ d'acide méthacrylique, les esters de cycloalkyle en $C_5$-$C_{20}$ d'acide acrylique, les esters de cycloalkyle en $C_5$-$C_{20}$ d'acide méthacrylique, et les monomères monovinylaromatiques, la quantité relative de monomères monovinylaromatiques ne dépassant pas 15 % en poids par rapport au poids total de monomères ;
b) 0,1 à 5 % en poids, par rapport au total de monomères M, d'un ou plusieurs monomères M2 choisis parmi des monomères monoéthyléniquement insaturés portant au moins un groupe carboxyle ;
et éventuellement l'un ou les deux des monomères M3 et M4
c) 0 à 2 % en poids, par rapport au poids total de monomères M, d'un ou plusieurs monomères monoéthyléniquement insaturés M3 portant au moins un groupe sulfate ou sulfonate ; et
d) 0 à 0,4 % en poids, par rapport au poids total de monomères M, d'un ou plusieurs monomères éthyléniquement insaturés non ioniques M4 différents des monomères M1, M2 et M3 ;

moyennant quoi la polymérisation en émulsion est effectuée en présence d'une base en une quantité telle suffisante pour neutraliser plus de 20 % en moles, en particulier au moins 25 % en moles et notamment au moins 30 % en moles des groupes carboxyle de tous les monomères M2 ;
dans laquelle les monomères M comprennent moins de 0,1% en poids, par rapport au poids total de monomères M, de monomères éthyléniquement insaturés portant un ou plusieurs groupes phosphate et où la dispersion de polymère ne contient pas ou pas plus de 0,2 %, sur la base des monomères M polymérisés d'un colloïde protecteur.

**15.** Procédé de préparation d'une dispersion aqueuse de polymère d'un polymère P de la revendication 14 comprenant une polymérisation en émulsion des monomères éthyléniquement insaturés M tels que définis dans la revendication 14 en présence d'au moins un émulsifiant anionique et en l'absence ou en présence d'au plus 0,2 %, sur base des monomères M, d'un colloïde protecteur, moyennant quoi la polymérisation en émulsion est effectuée en présence d'une base en une quantité telle suffisante pour neutraliser plus de 20 % en moles, en particulier plus de 25 % en moles et notamment au moins 30 % en moles des groupes carboxyle de tous les monomères M2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2002000798 A
- DE 102014013455
- DE 102018004944
- DE 102004023374
- WO 2020002102 A
- EP 671420 A
- EP 1422276 A
- WO 2009096925 A
- EP 346734 A
- EP 377199 A
- DE 4037079
- DE 3844444
- EP 1213 A
- US 20150152297 A
- DE 4003422 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### Non-patent literature cited in the description


- Ullmann's Encyclopädie der technischen Chemie [Ullmann's Encyclopedia of Industrial Chemistry. Verlag Chemie, 1992, vol. A21, 169
- **J. BRANDRUP** ; **E. H. IMMERGUT**. Polymer Handbook. J. Wiley, 1966
- Polymer Properties Database. Crow, 2015
- *Emulsion Polymerization in Encyclopedia of Polymer Science and Engineering*, 1987, vol. 8, 659
- **D.C. BLACKLEY**. *High Polymer Latices*, 1966, vol. 1, 35
- **H. WARSON**. The Applications of Synthetic Resin Emulsions. 1972, 246
- **D. DIEDERICH**. *Chemie in unserer Zeit*, 1990, vol. 24, 135-142
- Emulsion Polymerisation. Interscience Publishers, 1965
- **F. HÖLSCHER**. Dispersionen synthetischer Hochpolymerer. Springer-Verlag, 1969
- Makromolekulare Stoffe [Macromolecular Substances. **HOUBEN-WEYL**. Methoden der organischen Chemie [Methods of Organic Chemistry. Georg-Thieme-Verlag, 1961, vol. XIV/1, 192-208
- **J. BRANDRUP** ; **E.H. IMMERGUT**. Polymer Handbook. John Wiley & Sons, 1989, 133-141
- Characterization of Aqueous Polymer Dispersions. **H. WIESE**. Polymer Dispersions and Their Industrial Applications. Wiley-VCH, 2002, 41-73
- **T. G. FOX**. *Bull. Am. Phys. Soc.*, 1956, vol. 1, 123
- Ullmann's Encyclopädie der technischen Chemie [Ullmann's Encyclopedia of Industrial Chemistry. Verlag Chemie, 1980, vol. 19, 18
- Ullmann's Encyclopedia of Industrial Chemistry. Verlag Chemie, 1992, vol. A21, 169
- **J. BIELEMAN**. Additives for Coatings. Wiley-VCH, 2000
- **T. C. PATTON**. Paint Flow and Pigment Dispersions. John Wiley & Sons, 1978
- **M. SCHWARTZ** ; **R. BAUMSTARK**. Water based Acrylates for Decorative Coatings. Curt R. Vincentz Verlag, 2001